(19) Europäisches Patentamt
European Patent Office
Office européen des brevets

(11) EP 3 924 185 B1

(12) **EUROPÄISCHE PATENTSCHRIFT**

(45) Veröffentlichungstag und Bekanntmachung des Hinweises auf die Patenterteilung:
**25.01.2023 Patentblatt 2023/04**

(21) Anmeldenummer: **20703471.1**

(22) Anmeldetag: **11.02.2020**

(51) Internationale Patentklassifikation (IPC):
***B32B 27/30*** *(2006.01)* ***C08G 18/48*** *(2006.01)*
***C08G 18/75*** *(2006.01)* ***C08G 18/10*** *(2006.01)*
***C08G 18/24*** *(2006.01)* ***C08G 18/28*** *(2006.01)*
***C08G 18/38*** *(2006.01)* ***C09J 175/04*** *(2006.01)*

(52) Gemeinsame Patentklassifikation (CPC):
(C-Sets verfügbar)
**C08G 18/755; B32B 5/26; B32B 7/12; B32B 9/002; B32B 9/005; B32B 9/02; B32B 9/04; B32B 9/042; B32B 9/043; B32B 9/045; B32B 9/047; B32B 13/04; B32B 13/042; B32B 13/10; B32B 13/12;** (Forts.)

(86) Internationale Anmeldenummer:
**PCT/EP2020/053394**

(87) Internationale Veröffentlichungsnummer:
**WO 2020/165125 (20.08.2020 Gazette 2020/34)**

(54) **NEUE SYSTEME FÜR DIE GRUNDIERUNG UND DAS KLEBEN VON BODENBELÄGEN**

NEW SYSTEMS FOR THE PRIMING AND THE ADHESION OF FLOOR COVERINGS

NOUVEAUX SYSTÈMES POUR LA MISE DE COUCHE DE FOND ET LE COLLAGE DE REVÊTEMENTS DE SOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2019 EP 19157356**
**14.11.2019 EP 19209043**

(43) Veröffentlichungstag der Anmeldung:
**22.12.2021 Patentblatt 2021/51**

(73) Patentinhaber: **Covestro Intellectual Property GmbH & Co. KG**
**51373 Leverkusen (DE)**

(72) Erfinder:
- **THIEBES, Christoph**
  **51061 Köln (DE)**
- **ALMATO GUITERAS, Maria**
  **08032 Barcelona (ES)**
- **TEJADA ROSALES, Eva**
  **08100 Mollet del Vallés (Barcelona) (ES)**

(74) Vertreter: **Levpat**
**c/o Covestro AG**
**Gebäude K12**
**51365 Leverkusen (DE)**

(56) Entgegenhaltungen:
**WO-A1-2012/046784**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
**B32B 13/14; B32B 19/04; B32B 19/042; B32B 19/043; B32B 19/045; B32B 19/06; B32B 21/042; B32B 21/045; B32B 21/08; B32B 21/10; B32B 21/14; B32B 25/10; B32B 27/12; B32B 27/304; C04B 41/52; C04B 41/70; C08F 212/08; C08G 18/10; C08G 18/246; C08G 18/36; C08G 18/4825; C09J 175/04;** B32B 2255/02; B32B 2255/08; B32B 2255/26; B32B 2255/28; B32B 2307/54; B32B 2307/542; B32B 2471/00; C04B 2111/00491; C09D 133/12

C-Sets
**C04B 41/52, C04B 41/483;**
**C04B 41/52, C04B 41/4988;**
**C08F 212/08, C08F 220/14, C08F 220/1808, C08F 220/20, C08F 220/06, C08F 220/58;**
**C08G 18/10, C08G 18/289**

## Beschreibung

Die vorliegende Erfindung betrifft Schichtaufbauten enthaltend aus Polyacrylat-Grundierungen (AG) erhältliche Grundierschichten (G) und Zusammensetzungen auf Basis silanmodifizierter Polymere (KS) sowie ein Verfahren zum Kleben von Bodenbelägen auf vorbehandelten Untergründen.

Es ist in vielen Fällen vorteilhaft und notwendig, Bodenbeläge wie Parkett, Kork, Kautschuk, PVC Bahnen und Fliesen sowie Linoleum auf bauseitig vorliegenden Untergründen wie Estrichen oder Holzoberflächen zu kleben.

Bei besonderen Belastungen (Temperatur und Feuchtigkeit) oder stark dimensionsinstabilen Bodenbelägen (z.B. Massivdielen) werden bevorzugt reaktive Klebstoffe, beispielsweise feuchtigkeitshärtende Klebstoffe auf Basis von Polyurethanprepolymeren verwendet.

Eine neuere, für diese Verwendung geeignete Entwicklung sind Klebstoffe auf Basis silanmodifizierter oligomerer Verbindungen, sogenannte SMP-Klebstoffe (silanmodifizierte Polymerklebstoffe, mitunter auch als Hybridklebstoffe oder silanterminierte Polymerklebstoffe bezeichnet). Diese Klebstoffe sind gekennzeichnet durch oligomere organische Verbindungen (häufig auch als Prepolymere bezeichnet), die feuchtigkeitsreaktive Silangruppen, meist Dimethoxymethyl- oder Trimethoxysilangruppen, tragen. Silanmodifizierte Polymere (SMP) können sehr einfach aus isocyanatgruppenhaltigen Polyurethan-Polymeren erhalten werden, indem deren Isocyanatgruppen mittels Amino-, Thio- oder Hydroxysilanen zu Silangruppen umfunktionalisiert werden. Silanmodifizierte Polymere, welche frei sind von Harnstoffgruppen und nur wenige oder gar keine Urethangruppen enthalten, sind ebenfalls bekannt und beispielsweise durch Umsetzung von Polyetherpolyolen mit Isocyanatosilanen oder durch Hydrosilylierung von allylfunktionellen Polyethern zugänglich. Silanmodifizierte Polymere, die jeweils an den Enden des Polymerrückgrats mit Silangruppen modifiziert sind, werden auch als silanterminierte Polymere (STP) bezeichnet. Nach Kontakt mit Feuchtigkeit aus dem Untergrund oder der Luft vernetzen die feuchtigkeitsreaktiven Silangruppen durch Hydrolyse und anschließende Kondensation zu einem dreidimensionalen Siloxan-Netzwerk, der Klebstoffmatrix.

Weitere Bestandteile dieser Klebstoffe sind flüssige Extender, Weichmacher, mineralische Füllstoffe, Wasserfänger, Haftvermittler, Katalysatoren und weitere Hilfsstoffe. Für die Klebung von Bodenbelägen weisen Klebstoffe auf Basis silanmodifizierter Polymere in der Regel folgende Vorteile auf: Einkomponentigkeit, Abwesenheit von Wasser und Lösemitteln, ausreichend lange offene Zeiten, keine praxisrelevante holzquellende Wirkung, kennzeichnungsfrei nach der deutschen Gefahrstoffverordnung und dem internationalem GHS-Kennzeichnungssystem.

Weiterhin vorteilhaft ist die pseudoplastische Rheologie von SMP-Klebstoffen. In der Praxis bedeutet dies, dass die Klebstoffe nicht verlaufen und sich gut mit einem Zahnspachtel auftragen lassen. Gezogene Klebstoffraupen bleiben formstabil und bieten damit eine wichtige Voraussetzung, kleinere Hohlräume zwischen Bodenbelag und Untergrund überbrücken zu können. Silanmodifizierte Polymerklebstoffe enthalten typischerweise Weichmacher und/oder nichtreaktive flüssige Extender, die die Viskosität des Klebstoffes senken und notwendige Verarbeitungseigenschaften garantieren. Leider sind diese auch verantwortlich für eine Reihe anwendungstechnischer Probleme und Beschränkungen. Die Löseeigenschaften dieser migrationsfähigen Flüssigkeiten können beispielsweise ein Anlösen von Gussasphaltestrich als Untergrund auslösen, warum dieser vor Klebung eines Bodenbelages mit weichmacherhaltigen silanmodifizierte Polymerklebstoffen grundiert werden muss.

Die Grundierung muss in diesem Fall eine ausreichende Weichmacherbeständigkeit haben, d.h. sie darf durch den Weichmacher aus dem Klebstoff nicht angelöst werden, was ihre Festigkeit reduzieren würde und es darf keine Migration des Weichmachers durch die Grundierung in den Gussasphalt geben.

Typischerweise als Grundierung zum Haftungsaufbau und zur Staubbindung verwendete rein physikalisch abbindenden Dispersionsgrundierungen auf Basis von Vinylacetat-Ethylen-, Styrol-Acrylat- oder Acrylsäureester-Copolymeren sind nicht gegen Weichmacher beständig und bauen nicht ausreichend Haftung zu silanmodifizierten Klebstoffen auf. Es ist daher bei silanmodifizierten Klebstoffen grundsätzlich mit Haftungsproblemen zu rechnen, insbesondere aber nicht notwendigerweise, wenn diese migrierende Bestandteile enthalten.

Eine höhere Weichmacherbeständigkeit erreichen Reaktiv-Systeme bestehend aus 2 miteinander reagierenden Komponenten, z.B. wässrige, lösemittlehaltige oder 100%ige 2K Epoxygrundierungen. Diese Systeme haben den Nachteil einer zu geringen Topfzeit oder einer zu langen Wartezeit bis zur Begehfestigkeit der Grundierung.

Weiterer Stand der Technik sind Polyurethan-Grundierungen, die in der Regel einkomponentig (1-K) sind und auf Diphenylmethandiisocyanat-Präpolymeren (MDI) basieren. Diese besitzen eine hervorragende Weichmacherbeständigkeit. Ein großer Nachteil ist allerdings, dass die Aushärtereaktionen und damit auch der Endzustand des sich bildenden Polymerfilms stark von den Umgebungsbedingungen abhängig sind, insbesondere der Raumtemperatur, der relativen Raumluftfeuchtigkeit, der Untergrundtemperatur und dem Wassergehalt des Untergrunds. Ein Problem stellt dabei die unterschiedlich stark ausgeprägte $CO_2$-Entwicklung während der Härtungsreaktionen dar, die zu einem porösen Polymerfilm führt, was sowohl die mechanischen als auch die wasserdampfdiffusionsbremsenden Eigenschaften verschlechtert. Aufgrund der schichtdickenabhängigen Tendenz zum Schäumen durch $CO_2$-Entwicklung müssen die für eine wirksame Absperrung gegen Feuchtigkeit oder Migration von Weichmacher notwendigen Schichtdicken in zwei Arbeitsgängen aufgetragen werden, wobei nach dem letzten Arbeitsgang in der Regel Wartezeiten von mindestens 12h

vor dem Auftrag von Klebstoffen, insbesondere von SMP-Klebstoffen einzuhalten sind.

Aufgabe der vorliegenden Erfindung ist deshalb das Auffinden von Systemen bestehend aus Grundierung und Klebstoff für die Verklebung von Holz-, Kork-, Linonleum-, Kautschuk, und/oder PVC-Böden auf bauseitig vorliegenden Untergründen wie Estrichen, Fliesen oder Holzoberflächen, sowie ein Verfahren zur Verwendung dieses Systems bestehend aus Grundierung und Klebstoff für die Klebung von Holz-, Kork-, Linoleum-, Kautschuk- und/oder PVC-Böden auf bauseitig vorliegenden Untergründen wie beispielsweise Estrichen oder Holzoberflächen, welches die im Stand der Technik bekannten Nachteile nicht aufweist, wie beispielsweise ungeeignete Weichmacherbeständigkeit lange Wartezeiten zur Aushärtung der Grundierung vor Klebstoffapplikation, mehrmaliges Auftragen der Grundierung und $CO_2$ Entwicklung.

Überraschenderweise konnte im Rahmen der vorliegenden Erfindung gezeigt werden, dass sich Systeme bestehend aus selbstvernetzender Polyacrylat-Grundierung (AG) und Zusammensetzungen auf Basis silanmodifizierter Polymere (KS) für die Klebung von Holz-, Kork-, Linonleum-, Kautschuk und/oder PVC-Böden auf bauseitig vorliegenden Untergründen wie beispielsweise Estrichen oder Holzoberflächen hervorragend eignen und die im Stand der Technik beschriebenen Nachteile, wie beispielsweise ungeeignete Weichmacherbeständigkeit der Grundierung, lange Wartezeiten zur Aushärtung der Grundierung vor Klebstoffauftrag, Notwendigkeit eines mehrmaligen Auftragen der Grundierung vor Klebstoffauftrag, Anmischen sowie kurze Topf- und Verarbeitungszeiten der Grundierung nicht aufweisen.

Die Aufgabe der vorliegenden Erfindung konnte durch den Schichtaufbau von aus Polyacrylat-Grundierungen (AG) erhältlichen Grundierschichten (G) und härtbaren Zusammensetzungen auf Basis silanmodifizierter Polymere (KS) gelöst werden.

Unter einer "Zusammensetzung" wird im Rahmen der vorliegenden Erfindung ein Gemisch von mindestens zwei Inhaltsstoffen verstanden.

Der Begriff "härtbar" ist dahingehend zu verstehen, dass die Zusammensetzung unter dem Einfluss äußerer Bedingungen, insbesondere unter dem Einfluss in der Umgebung vorhandener und/oder bewusst zugeführter Feuchtigkeit aus einem relativ weichen, gegebenenfalls plastisch verformbaren Zustand in einen härteren Zustand übergehen kann. Allgemein kann die Vernetzung durch chemische und/oder physikalische Einflüsse erfolgen, neben der bereits erwähnten Feuchtigkeit also beispielsweise auch durch Zuführung von Energie in Form von Wärme, Licht oder sonstiger elektromagnetischer Strahlung, aber auch durch einfaches Inkontaktbringen der Zusammensetzung mit Luft oder einer reaktiven Komponente.

Im Rahmen der vorliegenden Erfindung, des Schichtaufbau von aus Polyacrylat-Grundierung (AG) erhältlicher Grundierschicht (G) und Zusammensetzung auf Basis silanmodifizierter Polymere (KS) sind in der Zusammensetzung (KS) die folgenden, silanmodifizierten Polymere mit mindestens einer Endgruppe der allgemeinen Formel (I)

$$-A_n-R-SiVYZ \qquad (I),$$

enthalten, worin

- A für eine zweibindige, mindestens ein Heteroatom enthaltende Bindegruppe steht,
- R für einen zweibindigen Kohlenwasserstoffrest mit 1-12 Kohlenstoff-Atomen steht,
- V, Y, Z für Substituenten am Si-Atom stehen, die unabhängig voneinander für $C_1$-$C_8$-Alkyl-, $C_1$-$C_8$-Alkoxy- oder $C_1$-$C_8$-Acyloxygruppen stehen, wobei mindestens einer der Reste V, Y, Z für eine $C_1$-$C_8$-Alkoxy- oder $C_1$-$C_8$-Acyloxygruppe steht, und
- n für 0 oder 1 steht.

Das vorstehend silanmodifizierte Polymer mit mindestens einer Endgruppe der allgemeinen Formel (I) ist bevorzugt ein Polyether oder ein Poly(meth)acrylsäureester.

Unter einem Polyether wird ein Polymer verstanden, dessen organische Wederholungseinheiten Ether-Funktionalitäten (-C-O-C-) in der Hauptkette enthalten. Nicht zu den Polyethern werden damit Polymere mit seitenständigen Ether-Gruppen gerechnet, wie zum Beispiel die Celluloseether, Stärkeether und Vinylether-Polymere. Auch Polyacetale wie das Polyoxymethylen (POM) werden im Allgemeinen nicht zu den Polyethern gezählt.

Unter einem Poly(meth)acrylsäureester wird ein Polymer auf der Basis von (Meth)acrylsäureestern verstanden, das daher als Wiederholungseinheit das Strukturmotiv

$$-CH_2-CR^a(COOR^b)-$$

aufweist, worin

$R^a$ für ein Wasserstoffatom (Acrylsäureester) oder für eine Methylgruppe (Methacrylsäureester) steht und

$R^b$ für lineare, verzweigte, cyclische und/oder auch funktionelle Substituenten enthaltende Alkylreste, beispielsweise für Methyl-, Ethyl-, Isopropyl-, Cyclohexyl, 2-Ethylhexyl-, oder 2-Hydroxyethylreste steht.

Besonders bevorzugt im Rahmen der Erfindung ist das vorstehend silanmodifizierte Polymer mit mindestens einer Endgruppe der allgemeinen Formel (I) ein Polyether. Polyether weisen eine flexible und elastische Struktur auf, mit der man Zusammensetzungen herstellen kann, die hervorragende elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Vorzugsweise beträgt das zahlenmittlere Molekulargewicht $M_n$ des dem vorstehend silanmodifizierten Polymer mit mindestens einer Endgruppe der allgemeinen Formel (I) zugrundeliegenden Polyethers 2.000 bis 100.000 g/mol (Dalton), wobei das Molekulargewicht besonders bevorzugt mindestens 6.000 g/mol und insbesondere mindestens 8.000 g/mol beträgt. Zahlenmittlere Molekulargewichte von mindestens 2.000 g/mol sind vorteilhaft für die Polyether im Rahmen der vorliegenden Erfindung, weil erfindungsgemäße Zusammensetzungen (KS) auf der Basis von Polyethern mit einem solchen Mindestmolekulargewicht signifikante filmbildende Eigenschaften aufweisen. Beispielsweise beträgt das zahlenmittlere Molekulargewicht $M_n$ des Polyethers 4.000 bis 100.000, vorzugsweise 8.000 bis 50.000, besonders bevorzugt 10.000 bis 30.000, insbesondere 17.000 bis 27.000 g/mol. Diese Molekulargewichte sind besonders vorteilhaft, da die entsprechenden Zusammensetzungen (KS) ein ausgewogenes Verhältnis von Viskosität (leichte Verarbeitbarkeit), Festigkeit und Elastizität aufweisen. Besonders vorteilhaft ist diese Kombination in einem Molekulargewichtsbereich von 18.000 bis 26.000, insbesondere von 20.000 bis 24.000 g/mol, ausgeprägt.

Besonders vorteilhafte viskoelastische Eigenschaften lassen sich erreichen, wenn man Polyether, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Auf diese Art hergestellte Polyether zeichnen sich durch eine besonders enge Molmassenverteilung, durch eine hohe mittlere Molmasse und durch eine sehr niedrige Zahl an Doppelbindungen an den Enden der Polymerketten aus.

Vorzugsweise beträgt die maximale Polydispersität $M_w/M_n$ des dem vorstehend silanmodifizierten Polymer mit mindestens einer Endgruppe der allgemeinen Formel (I) zugrundeliegenden Polyethers daher 3, besonders bevorzugt 1.7 und ganz besonders bevorzugt 1.5.

Unter dem Molekulargewicht $M_n$ wird das zahlenmittlere Molekulargewicht des Polymeren verstanden. Dieses wird, ebenso wie das gewichtsmittlere Molekulargewicht $M_w$, durch Gelpermeationschromatographie (GPC, auch: SEC) mit Polystyrolstandard und Tetrahydrofuran als Eluenten bestimmt. Dieses Verfahren ist dem Fachmann bekannt. Die Polydispersität leitet sich aus den mittleren Molekulargewichten $M_w$ und $M_n$ ab. Sie wird berechnet als PD = $M_w/ M_n$. Das Verhältnis $M_w/M_n$ (Polydispersität) gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Eine geringe Polydispersität von beispielsweise kleiner als 1.5 deutet auf eine vergleichsweise enge Molekulargewichtsverteilung und damit auf die spezifische Ausprägung mit dem Molekulargewicht zusammenhängender Eigenschaften, wie zum Beispiel der Viskosität, hin. Insbesondere weist daher im Rahmen der vorliegenden Erfindung der dem vorstehend silanmodifizierten Polymer mit mindestens einer Endgruppe der allgemeinen Formel (I) zugrundeliegende Polyether eine Polydispersität ($M_w/M_n$) von kleiner als 1.3 auf.

Unter zweibindigen oder bivalenten, mindestens ein Heteroatom enthaltenden Bindegruppe A wird eine zweibindige chemische Gruppe verstanden, die das Polymergerüst des alkoxy- und/oder acyloxysilanterminierten Polymers mit dem Rest R der Endgruppe verknüpft. Die zweibindige Bindegruppe A kann beispielsweise bei der Herstellung des alkoxy- und/oder acyloxysilanterminierten Polymers ausgebildet werden, zum Beispiel als Amid- beziehungsweise Urethangruppe durch die Reaktion eines mit Hydroxygruppen funktionalisierten Polyethers mit einem Isocyanatosilan. Dabei kann die bivalente Bindegruppe von im zugrundeliegenden Polymergerüst auftretenden Strukturmerkmalen sowohl unterscheidbar als auch nicht unterscheidbar sein. Letzteres liegt beispielsweise vor, wenn sie mit den Verknüpfungspunkten der Wederholungseinheiten des Polymergerüsts identisch ist.

Der Index "n" entspricht 0 (Null) oder 1, das heißt die zweibindige Bindegruppe A verknüpft das Polymergrundgerüst mit dem Rest R (n = 1) oder das Polymergerüst ist direkt mit dem Rest R verbunden bzw. verknüpft (n = 0).

Bevorzugt ist die zweibindige Bindegruppe A in der allgemeinen Formel (I) ein Sauerstoffatom oder eine Gruppe -NR'-, worin R' ein H-Atom oder ein Alkyl- oder Arylrest mit 1 bis 12 C-Atomen ist, oder die zweibindige Bindegruppe A enthält eine Amid-, Carbamat-, Harnstoff-, Imino-, Carboxylat-, Carbamoyl-, Amidino-, Carbonat-, Sulfonat- oder Sulfinatgruppe.

Besonders bevorzugt als Bindegruppe A sind Urethan- und Harnstoffgruppen, die durch Umsetzung bestimmter funktioneller Gruppen eines Prepolymers mit einem Organosilan, welches eine weitere funktionelle Gruppe trägt, erhalten werden können. Urethangruppen können zum Beispiel entstehen, wenn entweder das Polymergerüst terminale Hydroxygruppen enthält und als weitere Komponente Isocyanatosilane eingesetzt werden, oder wenn umgekehrt ein Polymer,

welches endständige Isocyanatgruppen aufweist, mit einem terminale Hydroxygruppen enthaltenden Alkoxysilan umgesetzt wird. Auf ähnliche Weise können Harnstoffgruppen erhalten werden, wenn eine terminale primäre oder sekundäre Aminogruppe - entweder am Silan oder am Polymer - eingesetzt wird, die mit einer im jeweiligen Reaktionspartner vorhandenen terminalen Isocyanatgruppe reagiert. Das bedeutet, dass entweder ein Aminosilan mit einem terminale Isocyanatgruppen aufweisenden Polymer oder ein terminal mit einer Aminogruppe substituiertes Polymer mit einem Isocyanatosilan zur Reaktion gebracht wird.

Urethan- und Harnstoffgruppen erhöhen vorteilhaft die Festigkeit der Polymerketten und des gesamten vernetzten Polymers.

Der Rest R ist ein zweibindiger Kohlenwasserstoffrest mit 1 bis 12 C-Atomen. Bei dem Kohlenwasserstoffrest kann es sich um einen geradkettigen, verzweigten oder cyclischen Alkylenrest handeln. Der Kohlenwasserstoffrest kann gesättigt oder ungesättigt sein. R ist bevorzugt ein zweibindiger Kohlenwasserstoffrest mit 1 bis 6 C-Atomen. Über die Länge der Kohlenwasserstoffreste, die eines der Bindeglieder beziehungsweise das Bindeglied zwischen Polymergerüst und Silylrest bilden, kann die Aushärtungsgeschwindigkeit der Zusammensetzung beeinflusst werden. Besonders bevorzugt ist R eine Methylen-, Ethylen- oder n-Propylengruppe, insbesondere ein Methylen- oder n-Propylenrest. Alkoxysilan- terminierte Verbindungen mit einer Methylengruppe als Bindeglied zum Polymergerüst - sogenannte $\alpha$-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt.

Generell führt eine Verlängerung der verbindenden Kohlenwasserstoffkette zu einer verminderten Reaktivität der Polymere. Insbesondere die $\gamma$-Silane - sie enthalten den unverzweigten Propylenrest als Bindeglied - weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf. Durch ein bewusstes Kombinieren von $\alpha$- und $\gamma$-Alkoxysilanterminierten Bausteinen kann somit die Aushärtungsgeschwindigkeit der Systeme wunschgemäß beeinflusst werden. Die mit dem Si-Atom direkt verbundenen Substituenten V, Y und Z sind unabhängig voneinander $C_1$-$C_8$-Alkylreste, $C_1$-$C_8$-Alkoxyreste oder $C_1$-$C_8$-Acyloxyreste. Dabei muss mindestens einer der Reste V, Y, Z eine hydrolysierbare Gruppe, das heißt ein $C_1$-$C_8$-Alkoxyrest oder ein Ci-Cs-Acyloxyrest sein. Als hydrolysierbare Gruppen werden vorzugsweise Alkoxygruppen, insbesondere Methoxy-, Ethoxy-, i-Propyloxy- und i-Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die durch Hydrolyse der Reste gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe $-O-CO-CH_3$, verwendet werden.

Das/die alkoxy- und/oder acyloxysilanterminierte(n) Polymer(e) weist/weisen bevorzugt mindestens zwei Endgruppen der allgemeinen Formel (I) auf. Jede Polymerkette enthält damit mindestens zwei Verknüpfungsstellen, an denen sich unter Abspaltung der hydrolysierten Reste in Gegenwart von Luftfeuchtigkeit die Kondensation der Polymere vollziehen kann. Auf diese Weise wird eine regelmäßige und schnelle Vernetzbarkeit erreicht, sodass Verklebungen mit guten Festigkeiten erhalten werden können. Darüber hinaus lässt sich über die Menge und den Aufbau der hydrolysierbaren Gruppen - zum Beispiel durch Verwendung von Di- oder Trialkoxysilylgruppen, Methoxygruppen oder längeren Resten - die Ausgestaltung des erzielbaren Netzwerks als langkettiges System (Thermoplaste), relativ weitmaschiges dreidimensionales Netzwerk (Elastomere) oder hochvernetztes System (Duroplaste) steuern, sodass damit unter anderem die Elastizität, die Flexibilität und die Hitzebeständigkeit der fertig vernetzten Zusammensetzungen beeinflusst werden können.

Generell verfügen Polymere, die Di- beziehungsweise Trialkoxysilylgruppen enthalten, über hoch reaktive Verknüpfungsstellen, die ein schnelles Aushärten, hohe Vernetzungsgrade und damit gute Endfestigkeiten ermöglichen. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.

Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" - der Formstabilität eines entsprechenden Klebstoffs unter dem Einfluss von Kraft- und gegebenenfalls Temperatureinwirkung - auf.

Besonders bevorzugt sind die Reste V, Y und Z in der allgemeinen Formel (I) jeweils unabhängig voneinander eine Methyl-, eine Ethyl-, eine Methoxy- oder eine Ethoxygruppe, wobei mindestens einer der Reste eine Methoxy- oder Ethoxygruppe ist. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen.

Besonders bevorzugt sind V, Y und Z jeweils unabhängig voneinander eine Methyl- oder eine Methoxygruppe, wobei mindestens einer der Reste eine Methoxy-Gruppe ist. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden.

Ebenfalls besonders bevorzugt ist V eine Alkylgruppe und Y und Z sind jeweils unabhängig voneinander eine Alkoxygruppe, oder V, Y und Z sind jeweils unabhängig voneinander eine Alkoxygruppe.

Interessante Gestaltungsmöglichkeiten eröffnen auch Kombinationen beider Gruppen. Wird zum Beispiel für V Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn auch über die Ausgestaltung der Alkoxygruppen eine verzögerte Aushärtung erreicht werden soll.

Weiterhin sind kommerziell erhältliche silanmodifizierte Polymere, insbesondere Produkte unter den Handelsnamen MS Polymer™ (von Kaneka Corp.; insbesondere die Typen S203H, S303H, S227, S810, MA903 oder S943); MS Polymer™ bzw. Silyl™ (von Kaneka Corp.; insbesondere die Typen SAT010, SAT030, SAT200, SAX350, SAX400, SAX725, MAX450, MAX602 oder MAX951 ); Excestar® (von Asahi Glass Co. Ltd.; insbesondere die Typen S2410, S2420, S3430 oder S3630); SPUR+* (von Momentive Performance Materials; insbesondere die Typen, 1015LM oder 1050MM); Vorasil™ (von Dow Chemical Co.; insbesondere die Typen 602 oder 604); Desmoseal® S (von Covestro Deutschland AG; insbesondere die Typen S XP 2458, S XP 2636, S XP 2749, S XP 2774 oder S XP 2821 ); TEGOPAC® (von Evonik Industries AG; insbesondere die Typen Seal 100, Bond 150 oder Bond 250); oder Geniosil® STP (von Wacker Chemie AG; insbesondere die Typen E15, E35, E10, E30) zu nennen.

Der Anteil der Gesamtmenge an dem vorstehend silanmodifizierten Polymer mit mindestens einer Endgruppe der allgemeinen Formel (I) in der Zusammensetzung auf Basis silanmodifizierter Polymere (KS) beträgt bevorzugt 5 bis 75 Gew.-Prozent, besonders bevorzugt 10 bis 50 Gew.-Prozent, beispielsweise 12 bis 35 Gew.-Prozent, insbesondere 15 bis 25 Gew.-Prozent, jeweils bezogen auf das Gesamtgewicht der Zusammensetzung (KS).

Weiterhin können die Zusammensetzungen auf Basis silanmodifizierter Polymere (KS) noch weitere Bestandteile wie beispielsweise Weichmacher, Katalysatoren, Füllstoffe, Reaktivverdünner, Trocknungsmittel und Haftvermittler sowie Hilfsstoffe enthalten.

Der Weichmacher ist bevorzugt ausgewählt aus Cyclohexandicarbonsäuredialkylester, bei dem die Alkylreste der Estergruppen unabhängig voneinander jeweils 1 bis 20 C-Atome enthalten, bevorzugt Cyclohexan-1,2-dicarbonsäurediisononylester, auch bezeichnet als Diisononyl-cyclohexan-1,2-dicarbonsäurester (DINCH), einem anderen Dicarbonsäureester, Fettsäureester, einem Ester OH-Gruppen tragender oder epoxidierter Fettsäuren, einem Fett, einem Glykolsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehr davon. Durch die gezielte Auswahl eines dieser Weichmacher oder einer spezifischen Kombination können weitere vorteilhafte Eigenschaften der erfindungsgemäßen Zusammensetzung, zum Beispiel Geliervermögen der Polymere, Kälteelastizität beziehungsweise Kältebeständigkeit oder auch antistatische Eigenschaften realisiert werden.

Von den Polyether-Weichmachern werden bevorzugt endgruppenverschlossene Polyethylenglykole eingesetzt, beispielsweise Polyethylen- oder Polypropylenglykoldi-$C_1$-$C_4$-Alkylether, insbesondere die Dimethyl- oder Diethylether von Diethylenglykol oder Dipropylenglykol, sowie Gemische aus zwei oder mehr davon. Ebenfalls als Weichmacher geeignet sind beispielsweise Ester der Abietinsäure, Buttersäureester, Essigsäureester, Propionsäureester, Thiobuttersäureester, Zitronensäureester sowie Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf). Darüber hinaus sind als Weichmacher geeignet die reinen oder gemischten Ether monofunktioneller, linearer oder verzweigter $C_4$-$C_8$-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf). Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im Wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Grundsätzlich können auch Phthalsäureester als Weichmacher eingesetzt werden, diese werden jedoch aufgrund ihres toxikologischen Potentials nicht bevorzugt.

Eine für bestimmte Anwendungen zu hohe Viskosität der Zusammensetzungen auf Basis silanmodifizierter Polymere (KS) kann auch durch Verwendung eines Reaktivverdünners auf einfache und zweckmäßige Weise verringert werden, ohne dass es zu Entmischungserscheinungen (zum Beispiel Weichmacherwanderung) in der ausgehärteten Masse kommt. Vorzugsweise weist der Reaktivverdünner mindestens eine funktionelle Gruppe auf, die nach der Applikation zum Beispiel mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme. Als Reaktivverdünner kann man alle Verbindungen, die mit der Zusammensetzung auf Basis silanmodifizierter Polymere (KS) unter Verringerung der Viskosität mischbar sind und über mindestens eine mit dem Bindemittel reaktive Gruppe verfügen, allein oder als Kombination mehrerer Verbindungen einsetzen. Die Viskosität des Reaktivverdünners beträgt bevorzugt weniger als 20.000 mPas, besonders bevorzugt etwa 0.1 - 6.000 mPas, ganz besonders bevorzugt 1-1000 mPas (Brookfield RVT, 23 °C, Spindel 7, 10 U/min).

Als Reaktivverdünner lassen sich beispielsweise folgende Stoffe einsetzen: mit Isocyanatosilanen umgesetzte Polyalkylenglykole (zum Beispiel Synalox 100-50B, DOW), Alkyltrimethoxysilan, Alkyltriethoxysilan, wie Methyltrimethoxysilan, Methyltriethoxysilan sowie Vinyltrimethoxysilan (XL 10, Wacker), Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen. Ferner sind ebenfalls folgende Polymere von Kaneka Corp. Als Reaktivverdünner einsetzbar: MS S203H, MS S303H, MS SAT 010, und MS SAX 350.

Weiterhin als Reaktivverdünner geeignet sind Polymere, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH-Gruppen enthält. Die OH-Gruppen können sowohl primär als auch sekundär sein.

Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie zum Beispiel Ester, Carbonate, Amide enthalten.

Zur Herstellung eines Reaktivverdünners durch Umsetzung von Polyol mit Polyisocyanat und Alkoxysilan wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch für Zusammensetzungen auf Basis silanmodifizierter Polymere (KS) Verbindungen mit zwei bis vier Isocyanatgruppen, insbesondere mit zwei Isocyanatgruppen bevorzugt.

Unter den Alkoxysilylgruppen sind die Di- und Trialkoxysilylgruppen bevorzugt. Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6- Hexamethylendiisocyanat (HDI), Cyclobutan-1,3-diisocyanat, Cyclohexan-1,3- und -1,4-dii- socyanat, Bis(2-isocyanato-ethyl)fumarat, sowie Gemische aus zwei oder mehr davon, 1- Isocyanato-3,3,5-trimethyl-5-isocyanatomethylcyclohexan (Isophorondiisocyanat, I PDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1 ,6-Diisocyanato-2,2,4-trimethylhexan, 1,6-Dii-socyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'- Diphenylmethandiisocyanat, 2,2'-Diphenylmethandiisocyanat oder 4,4'-Diphenylme- thandiisocyanat (MDI) oder deren partiell oder vollständig hydrierte Cycloalkylderivate, beispielsweise vollständig hydriertes MDI (H12-MDI), alkylsubstituierte Diphenylmethan- diisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophe- nylperfluorethan, Phthalsäure-bisisocyanatoethylester, 1-Chlormethylphenyl-2,4- oder -2,6- diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der Zusammensetzungen auf Basis silanmodifizierter Polymere (KS) lassen sich neben oder anstatt eines Reaktivverdünners auch Lösungsmittel einsetzen. Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da in diesem Fall die Lagerstabilität steigt. $C_1$-$C_6$-Alkohole, besonders Methanol, Ethanol, i-Propanol, Isoamylalkohol und Hexanol werden besonders bevorzugt. Die erfindungsgemäße Zusammensetzung kann außerdem einen Haftvermittler umfassen. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich $\alpha$- oder $\beta$-Pinen, Dipenten oder Limonen gewonnen werden. Die Polymerisation dieser Monomere erfolgt in der Regel kationisch unter Initiierung mit Friedel-Crafts- Katalysatoren. Zu den Terpenharzen werden auch Copolymere aus Terpenen und anderen Monomeren, beispielsweise Styrol, $\alpha$-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole. Besonders gut geeignet sind Silan-Haftvermittler, insbesondere Aminosilane.

In einer speziellen Ausführungsform im Rahmen der Erfindung umfassen die Zusammensetzungen auf Basis silanmodifizierter Polymere (KS) ein Silan der allgemeinen Formel (II) als Haftvermittler,

$$R^1 R^2N\text{-}R^3\text{-}SiV'Y'Z' \qquad (II),$$

worin

| | |
|---|---|
| $R^1$ und $R^2$ | unabhängig voneinander für Wasserstoff oder $C_1$-$C_8$-Alkylreste stehen, |
| $R^3$ | für einen zweibindigen, gegebenenfalls ein Heteroatom enthaltenden Kohlenwasserstoffrest mit 1-12 Kohlenstoffatomen steht, und |
| V', Y', Z' | für jeweils unabhängig voneinander $C_1$-$C_8$-Alkyl-, $C_1$-$C_8$-Alkoxy- oder $C_1$-$C_8$-Acyloxyreste stehen, wobei mindestens einer der Reste V', Y', Z' eine $C_1$-$C_8$-Alkoxy- oder $C_1$-$C_8$-Acyloxygruppe ist. |

Derartige Verbindungen weisen naturgemäß eine hohe Affinität zu den bindenden Polymerkomponenten der Zusammensetzung auf Basis silanmodifizierter Polymere (KS), aber auch zu einer großen Bandbreite an polaren sowie unpolaren Oberflächen auf und tragen deshalb zur Ausbildung einer besonders stabilen Haftung zwischen der Klebstoffzusammensetzung und den jeweils zu verklebenden Substraten bei.

Bei der Bindegruppe $R^3$ kann es sich beispielsweise um einen geradkettigen oder verzweigten oder cyclischen, substituierten oder unsubstituierten Alkylenrest handeln. Gegebenenfalls ist als Heteroatom darin Stickstoff (N) oder Sauerstoff (O) enthalten. Wenn V', Y' und/oder Z' eine Acyloxygruppe sind, kann dies zum Beispiel die Acetoxygruppe $-OCO-CH_3$ sein.

Ein oder mehrere Haftvermittler ist/sind bevorzugt zu 0.1 bis 5 Gew.-Prozent, stärker bevorzugt zu 0.2 bis 2 Gew.-Prozent, insbesondere zu 0.3 bis 1 Gew.-Prozent, jeweils bezogen auf das Gesamtgewicht der Zusammensetzung, in der Zusammensetzungen auf Basis silanmodifizierter Polymere (KS) enthalten.

Die Zusammensetzungen auf Basis silanmodifizierter Polymere (KS) können einen Katalysator für die Vernetzung der silanfunktionellen Polymere mittels Feuchtigkeit umfassen. Diese sind dem Fachmann bekannt. Derartige Katalysatoren sind insbesondere Metallkatalysatoren in Form von Organozinnverbindungen wie Dibutylzinndilaurat und Dibutylzinndiacetylacetonat, Titankatalysatoren, Aminogruppenhaltige Verbindungen, beispielsweise 1,4-Diazabicyclo[2.2.2]octan und 2,2'-Dimorpholinodiethylether, Aminosilane sowie Mischungen der genannten Katalysatoren. Bevorzugt werden aminogruppenhaltige Verbindungen eingesetzt.

Als Füllstoffe für die Zusammensetzungen auf Basis silanmodifizierter Polymere (KS) eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind.

Hohlkugeln auf Kunststoffbasis sind beispielsweise unter den Bezeichnungen Expancel® oder Dualite® kommerziell erhältlich. Diese sind aus anorganischen oder organischen Stoffen zusammengesetzt, jede mit einem Durchmesser von 1 mm oder weniger, bevorzugt von 500 μm oder weniger. Für manche Anwendungen sind Füllstoffe bevorzugt, die den Zubereitungen Thixotropie verleihen. Solche Füllstoffe werden auch als Theologische Hilfsmittel beschrieben, zum Beispiel hydrogenisiertes Rizinusöl, Fettsäureamide oder quellbare Kunststoffe wie PVC. Damit sie gut aus einer geeigneten Dosiervorrichtung (zum Beispiel Tube) ausgepresst werden können, besitzen solche Zubereitungen eine Viskosität von 3.000 bis 15.000, vorzugsweise 4.000 bis 8.000 mPas oder auch 5.000 bis 6.000 mPas.

Die Füllstoffe werden vorzugsweise in einer Menge von 1 bis 75 Gew.-Prozent, besonders bevorzugt von 10 bis 70 Gew.-Prozent, ebenfalls bevorzugt von 25 bis 60 Gew.-Prozent und insbesondere bevorzugt von 35 bis 55 Gew.-Prozent, bezogen auf das Gesamtgewicht der Zusammensetzung auf Basis silanmodifizierter Polymere (KS), eingesetzt. Es kann ein einzelner Füllstoff oder eine Kombination mehrerer Füllstoffe verwendet werden.

Beispielsweise wird als Füllstoff eine hochdisperse Kieselsäure mit einer BET-Oberfläche von 10 bis 500 $m^2/g$ eingesetzt. Bei ihrer Verwendung bewirkt eine derartige Kieselsäure keine wesentliche Erhöhung der Viskosität der Zusammensetzung auf Basis silanmodifizierter Polymere (KS), trägt aber zu einer Verstärkung der gehärteten Zubereitung bei. Über diese Verstärkung werden zum Beispiel die Anfangsfestigkeiten, Zugscherfestigkeiten und die Adhäsion der Kleb-, Dicht- oder Beschichtungsstoffe, in denen die Zusammensetzung auf Basis silanmodifizierter Polymere (KS) verwendet wird, verbessert. Bevorzugt werden ungecoatete Kieselsäuren mit einer BET-Oberfläche von kleiner als 100, stärker bevorzugt von kleiner als 65 $m^2/g$, und/oder gecoatete Kieselsäuren mit einer BET-Oberfläche 100 bis 400, stärker bevorzugt von 100 bis 300, insbesondere von 150 bis 300 und ganz besonders bevorzugt von 200 bis 300 $m^2/g$ eingesetzt.

Als Zeolithe werden bevorzugt Alkali-Alumosilikate eingesetzt, beispielsweise Natrium-Kalium-Alumosilikate der allgemeinen Summenformel $aK_2O*bNa_2O*Al_2O_3*2SiO*nH_2O$ mit $O < a, b < 1$ und $a+b=1$. Vorzugsweise ist die Porenöffnung des eingesetzten Zeoliths beziehungsweise der eingesetzten Zeolithe gerade groß genug, um Wassermoleküle aufzunehmen. Dementsprechend ist eine effektive Porenöffnung der Zeolithe von weniger als 0.4 nm bevorzugt. Besonders bevorzugt beträgt die effektive Porenöffnung 0.3 nm $\pm$ 0.02 nm. Der/die Zeolith(e) wird/werden vorzugsweise in Form eines Pulvers eingesetzt.

Bevorzugt wird Kreide als Füllstoff verwendet. Als Kreide können dabei kubische, nicht kubische, amorphe und andere Modifikationen von Calciumcarbonat eingesetzt werden.

Vorzugsweise sind die eingesetzten Kreiden oberflächenbehandelt beziehungsweise beschichtet. Als Beschichtungsmittel werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder

Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel wird üblicherweise in einem Anteil von 0.1 bis 20 Gew.-Prozent, bevorzugt 1 bis 5 Gew.-Prozent, bezogen auf das Gesamtgewicht der Rohkreide, eingesetzt.

Je nach angestrebtem Eigenschaftsprofil können gefällte oder gemahlene Kreiden oder Gemische davon verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1.5 $m^2/g$ und 50 $m^2/g$.

Ferner kann die Zusammensetzung auf Basis silanmodifizierter Polymere (KS) Antioxidantien enthalten. Vorzugsweise beträgt der Anteil der Antioxidantien an der Zusammensetzung auf Basis silanmodifizierter Polymere (KS) bis zu 7 Gew.-Prozent, insbesondere bis zu 5 Gew.-Prozent, jeweils bezogen auf das Gesamtgewicht der Zusammensetzung.

Die Zusammensetzung auf Basis silanmodifizierter Polymere (KS) kann darüber hinaus UV-Stabilisatoren enthalten. Vorzugsweise beträgt der Anteil der UV-Stabilisatoren an der Zusammensetzung auf Basis silanmodifizierter Polymere (KS) bis zu 2 Gew.-Prozent, insbesondere bis zu 1 Gew.-Prozent. Als UV- Stabilisatoren besonders geeignet sind die so genannten Hindered Amine Light Stabilisators (HALS). Bevorzugt wird ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die Zusammensetzung auf Basis silanmodifizierter Polymere (KS) weiter gegenüber eindringender Feuchtigkeit zu stabilisieren, um die Lagerfähigkeit (shelf-life) noch stärker zu erhöhen. Eine solche Verbesserung der Lagerfähigkeit lässt sich beispielsweise durch den Einsatz von Trockenmitteln erreichen. Als Trockenmittel eignen sich alle Verbindungen, die mit Wasser unter Bildung einer gegenüber den in der Zusammensetzung

vorliegenden reaktiven Gruppen inerten Gruppe reagieren, und hierbei möglichst geringe Veränderungen ihres Molekulargewichts erfahren. Weiterhin muss die Reaktivität der Trockenmittel gegenüber in die Zusammensetzung eingedrungener Feuchtigkeit höher sein als die Reaktivität der Endgruppen des in der Zusammensetzung vorliegenden Silyl-Gruppen tragenden Polymers. Als Trockenmittel eignen sich beispielsweise Isocyanate.

Vorteilhaft werden als Trockenmittel auch Silane eingesetzt, beispielsweise Vinylsilane wie 3-Vinylpropyltriethoxysilan, Oximsilane wie Methyl-O,O',O''-butan-2-on-trioximosilan oder O,O',O'',O'''-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Besonders bevorzugt sind hier Vinyltrimethoxysilan und Tetraethoxysilan hinsichtlich Effizienz und Kosten. Ebenfalls als Trockenmittel geeignet sind die oben genannten Reaktivverdünner, sofern sie ein Molekulargewicht ($M_n$) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen des erfindungsgemäßen Silyl-Gruppen tragenden Polymers. Schließlich können als Trockenmittel auch Alkylorthoformiate oder -orthoacetate eingesetzt werden, beispielsweise Methyl- oder Ethylorthoformiat, Methyl- oder Ethylorthoacetat. Die Zusammensetzung auf Basis silanmodifizierter Polymere (KS) enthält vorzugsweise 0.01 bis 10 Gew.-Prozent Trockenmittel, bezogen auf das Gesamtgewicht der Zusammensetzung.

Vorzugsweise enthält die Zusammensetzung auf Basis silanmodifizierter Polymere (KS) folgende Bestandteile in den angegebenen Gewichtsanteilen:

5-75 Gew.-Prozent mindestens ein silanmodifiziertes Polymer mit mindestens einer Endgruppe der allgemeinen Formel (I)

5-75 Gew.-Prozent Füllstoff

5-35 Gew.-Prozent Weichmacher

0.01-1 Gew.-Prozent Katalysator

wobei sich die Gewichtsanteile zu 100 Gew.-Prozent aufaddieren und die Gewichtsanteile auf das Gesamtgewicht Zusammensetzung auf Basis silanmodifizierter Polymere (KS) bezogen sind.

Als Hilfsstoffe kann die Zusammensetzung auf Basis silanmodifizierter Polymere (KS) über die bereits aufgeführten Bestandteile hinaus beispielsweise Stabilisatoren, UV-Stabilisatoren, Alterungsschutzmittel, rheologische Hilfsmittel, Farbpigmente oder Farbpasten, Fungizide, Flammschutzmittel und/oder gegebenenfalls auch in geringem Umfang Lösungsmittel enthalten.

Die Herstellung der Zusammensetzung auf Basis silanmodifizierter Polymere (KS) erfolgt nach bekannten Verfahren durch inniges Vermischen der Bestandteile in geeigneten Dispergieraggregaten, zum Beispiel einem Schnellmischer.

Die Zusammensetzung auf Basis silanmodifizierter Polymere (KS) können natürlich auch statt als Klebstoff als Dichtstoff eingesetzt werden.

Selbstverständlich kann bei der Auswahl der Zusammensetzung auf Basis silanmodifizierter Polymere (KS) auch auf bereits im Handel verfügbare Produkte zurückgegriffen werden, die unter der Bezeichnung SMP-, STP- oder auch Hybrid-Klebstoff vertrieben werden.

Einkomponenten (1K)-Beschichtungsmittel, die als Bindemittel eine selbstvernetzende Polyacrylatdispersion enhalten, sind seit langem bekannt. Sie eignen sich zur Herstellung von hochwertigen Überzügen, die hart, elastisch, abrieb- und chemikalienbeständig und vor allem auch witterungsstabil eingestellt werden können.

Im Rahmen der vorliegenden Erfindung, des Schichtaufbau von aus Polyacrylat-Grundierung (AG) erhältlicher Grundierschicht (G) und Zusammensetzung auf Basis silanmodifizierter Polymere (KS), liegt die Polyacrylat-Grundierung (AG) in Form einer wässrigen Polymerdispersion vor, wobei diese wässrige Polymerdispersion in Wasser dispergierte Polymerpartikel enthält, herstellbar durch radikalische Polymerisation von Monomeren umfassend

a) mindestens 50 Gew.-Prozent, bezogen auf die Gesamtmenge an Monomeren, mindestens eines Monomeren ausgewählt aus der Gruppe bestehend aus $C_1$- bis $C_{20}$-Alkylacrylaten, $C_1$- bis $C_{20}$-Alkylmethacrylaten, Vinylestern von bis zu 20 Kohlenstoffatomen enthaltenden Carbonsäuren, Vinylaromaten mit bis zu 20 Kohlenstoffatomen, Vinylhalogeniden, Vinylethern von 1 bis 10 Kohlenstoffatome enthaltenden Alkoholen, aliphatischen Kohlenwasserstoffen mit 2 bis 8 Kohlenstoffatomen und ein oder zwei Doppelbindungen und Mischungen dieser Monomere und

b) mindestens 0.1 Gew.-Prozent, bezogen auf die Gesamtmenge an Monomeren, mindestens eines Monomeren mit mindestens einer Säuregruppe, und

c) mindestens 0.1 bis 5 Gew.-Prozent, bezogen auf die Gesamtmenge an Monomeren, mindestens einer ethylenisch ungesättigten Verbindung mit mindestens einer funktionellen Gruppe, ausgewählt aus Ketogruppen und Aldehydgruppen;

wobei die wässerige Polymerdispersion zusätzlich zu den in Wasser dispergierten Polymerpartikeln mindestens eine Verbindung AH enthält, welche mindestens zwei funktionelle Gruppen aufweist, die mit den Ketogruppen oder mit den Aldehydgruppen eine Vernetzungsreaktion eingehen können;

wobei das Molverhältnis der mit Ketogruppen oder mit Aldehydgruppen reaktiven Gruppen der Verbindung AH zu den Keto- und Aldehydgruppen des Monomers b) von 1:10 bis 2:1 beträgt.

d) optional weitere Monomere d.

Die erfindungsgemäß zu verwendenden Polymerdispersionen (Polyacrylat-Grundierungen (AG)) sind durch radikalische Emulsionspolymerisation von ethylenisch ungesättigten, radikalisch polymerisierbaren Verbindungen (Monomeren) erhältlich. Die Polymerisation erfolgt dabei bevorzugt emulgatorfrei oder emulgatorarm in dem Sinne, dass weniger als 1 Gewichtsteil Emulgator oder weniger als 0.8 Gewichtsteile, vorzugsweise kleiner oder gleich 0.5 Gewichtsteile Emulgator, bezogen auf 100 Gewichtsteile Monomere, zur Stabilisierung der erfindungsgemäßen Polymerdispersion zugesetzt werden. Emulgatoren sind der Polymerisationsmischung vor oder nach der Polymerisation zugesetzte, nicht-polymere, amphiphile, oberflächenaktive Substanzen. Geringe Mengen an Emulgatoren, die z.B. durch die Verwendung von emulgatorstabilisierter Polymersaat bedingt sind, sind dabei unschädlich. Es kann auch insgesamt weniger als 0.3 Gew.-Teile oder weniger als 0.2 Gew.-Teile Emulgator, z.B. von 0.05 bis weniger als 1 Gew.-Teile, von 0.05 bis weniger als 0.8 Gew.-Teile, von 0.05 bis 0.5 Gew.-Teile, oder von 0.05 bis 0.3 Gew.-Teile bezogen auf 100 Gewichtsteile Monomere oder kein Emulgator verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: $C_8$- bis $C_{36}$-Alkyl), ethoxylierte Mono-, Di- und Trialkylphenole (EO- Grad: 3 bis 50, Alkylrest: $C_4$- bis $C_9$-Alkyl), Alkalimetallsalze von Dialkylestern der Sulfobernsteinsäure sowie Alkali- und Ammoniumsalze von Alkylsulfaten (Alkylrest: $C_8$- bis $C_{12}$-Alkyl), von ethoxylierten Alkanolen (EO-Grad: 4 bis 30, Alkylrest: $C_{12}$- bis $C_{18}$-Alkyl), von ethoxylierten Alkylphenolen (EO-Grad: 3 bis 50, Alkylrest: $C_4$- bis $C_9$-Alkyl), von Alkylsulfonsäuren (Alkylrest: $C_{12}$- bis $C_{18}$-Alkyl) und von Alkylarylsulfonsäuren (Alkylrest: $C_9$- bis Cis-Alkyl).

Weitere geeignete Emulgatoren sind Verbindungen der allgemeinen Formel

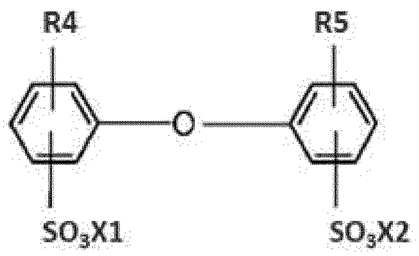

worin R4 und R5 Wasserstoff oder $C_4$- bis $C_{14}$-Alkyl bedeuten und nicht gleichzeitig Wasserstoff sind, und X1 und X2 Alkalimetallionen und/oder Ammoniumionen sein können. Vorzugsweise bedeuten R4, R5 lineare oder verzweigte Alkylreste mit 6 bis 18 Kohlenstoffatomen oder Wasserstoff und insbesondere mit 6, 12 und 16 Kohlenstoffatomen, wobei R4 und R5 nicht beide gleichzeitig Wasserstoff sind. X1 und X2 sind bevorzugt Natrium, Kalium oder Ammoniumionen, wobei Natrium besonders bevorzugt ist. Besonders vorteilhaft sind Verbindungen in denen X1 und X2 Natrium, R4 ein verzweigter Alkylrest mit 12 Kohlenstoffatomen und R5 Wasserstoff oder R4 ist. Häufig werden technische Gemische

verwendet, die einen Anteil von 50 bis 90 Gew.-Prozent des monoalkylierten Produktes aufweisen. Handelsprodukte geeigneter Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Ionische Emulgatoren oder Schutzkolloide sind bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Polymerisation kann auch in Gegenwart eines Schutzkolloids erfolgen. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Das zahlenmittlere Molekulargewicht von Schutzkolloide liegt z.B. oberhalb von 1000 g/mol.

Monomere a)

Die Monomerenmischung besteht aus mindestens 50 bis 90 Gew.-Prozent, bevorzugt 80 bis 90 Gew.-Prozent bezogen auf die Gesamtmenge an Monomeren a) bis d), aus mindestens einem Monomeren a) ausgewählt aus der Gruppe bestehend aus $C_1$- bis $C_{20}$-Alkylacrylaten, $C_1$- bis $C_{20}$-Alkylmethacrylaten, Vinylestern von bis zu 20 Kohlenstoffatome enthaltenden Carbonsäuren, Vinylaromaten mit bis zu 20 Kohlenstoffatomen, Vinylhalogeniden, Vinylethern von 1 bis 10 Kohlenstoffatome enthaltenden Alkoholen, aliphatischen Kohlenwasserstoffen mit 2 bis 8 Kohlenstoffatomen und ein oder zwei Doppelbindungen und Mischungen dieser Monomere.

Geeignete Monomere a) sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat sowie Benzyl(meth)acrylat, Isobutylacrylat, tert.-Butyl(meth)acrylat und Cyclohexyl(meth)acrylat. Insbesondere sind auch Mischungen der (Meth)acrylsäurealkylester geeignet. Vinylester von Carbonsäuren mit 1 bis 20 Kohlenstoffatomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 Kohlenstoffatome enthaltenden Alkoholen. Als Kohlenwasserstoffe mit 4 bis 8 Kohlenstoffatomen und zwei olefinischen Doppelbindungen seien Butadien, Isopren und Chloropren genannt. Als Monomere a) bevorzugt sind die Ci- bis $C_{10}$-Alkylacrylate und - methacrylate, insbesondere $C_1$- bis $C_8$-Alkylacrylate und -methacrylate sowie Styrol und deren Mischungen. Besonders bevorzugt sind Methylacrylat, Methylmethacrylat, Ethylacrylat, n-Butylacrylat, n-Butylmethacrylat, n-Hexylacrylat, Octylacrylat, 2-Ethylhexylacrylat, 2-Propylheptylacrylat, Styrol sowie Mischungen dieser Monomere. Ganz besonders bevorzugt sind Styrol, Methylmethacrylat und Ethylhexylacrylat.

Monomere b)

Die Monomerenmischung besteht zu mindestens 0.1 Gew.-Prozent, bevorzugt 0.1 bis 5 Gew.-Prozent, besonders bevorzugt 0.5 bis 3.5 Gew.-Prozent und ganz besonders bevorzugt 2 bis 4 Gew.-Prozent, bezogen auf die Gesamtmenge an Monomeren a) bis d), aus mindestens einem ethylenisch ungesättigten Monomeren mit mindestens einer Säuregruppe (Säuremonomer). Die Säuremonomere b) umfassen sowohl Monomere, die wenigstens eine saure Gruppen enthalten, als auch deren Anhydride und deren Salze. Zu den Monomeren b) zählen alpha, beta-monoethylenisch ungesättigte Mono- und Dicarbonsäuren, Halbester von alpha, beta-monoethylenisch ungesättigten Dicarbonsäuren, die Anhydride der vorgenannten alpha, beta-monoethylenisch ungesättigten Carbonsäuren sowie ethylenisch ungesättigte Sulfonsäuren, Phosphonsäuren oder Dihydrogenphosphate und deren wasserlösliche Salze, z.B. deren Alkalimetallsalze. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidome- thylpropansulfonsäure, Sulfopropylacrylat und Sulfopropylmethacrylat. Bevorzugte Monomere b) sind alpha, beta-monoethylenisch ungesättigte $C_3$-$C_8$-Carbonsäuren und $C_4$-$C_8$-Dicarbonsäuren, z.B. Itaconsäure, Crotonsäure, Vinylessigsäure, Acrylamidoglykolsäure, Acrylsäure und Methacrylsäure, sowie deren Anhydride. Besonders bevorzugte Monomere b) sind Itaconsäure, Acrylsäure und Methacrylsäure und deren Mischungen. Ganz besonders bevorzugtes Monomer b) ist Acrylsäure.

Monomere c)

In der vorliegenden Erfindung enthält die Polymerdispersion Keto- oder Aldehydgruppen. Die Keto- oder Aldehydgruppen können durch Copolymerisation von geeigneten Monomeren c) an das Polymer gebunden werden. Die

Monomerenmischung besteht zu mindestens zu 0.1 bis 5 Gew.-Prozent, bevorzugt zu 0.2 bis 5 Gew. Prozent, besonders bevorzugt zu 1 bis 3 Gew.-Prozent bezogen auf die Gesamtmenge an Monomeren a) bis d),aus ethylenisch ungesättigten Monomeren mit mindestens einer funktionellen Gruppe, ausgewählt aus Ketogruppen und Aldehydgruppen.

Monomere c) sind z. B. Acrolein, Methacrolein, Vinylalkylketone mit 1 bis 20, vorzugsweise 1 bis 10 Kohlenstoffatomen im Alkylrest, Formylstyrol, (Meth)acrylsäurealkylester mit ein oder zwei Keto- oder Aldehydgruppen, bzw. einer Aldehyd- und einer Ketogruppe im Alkylrest wobei der Alkylrest vorzugsweise insgesamt 3 bis 10 Kohlenstoffatome umfasst, z.B. (Meth)acryloxyalkyl-propanale, wie sie z.B. in der DE-A 2 722 097 beschrieben sind. Desweiteren eignen sich auch N-Oxoalkyl- (meth)acrylamide wie sie z. B. aus der DE-A 2 061 213 oder DE-A 2 207 209 bekannt sind, z.B. solche der Formel $R_6$-C(=O)-$R_7$-NH-C(=O)-$CR_8$=$CH_2$, wobei $R_6$ und $R_8$ unabhängig voneinander Wasserstoff oder eine Kohlenwasserstoffgruppe (vorzugsweise Alkyl) mit 1 bis 10 Kohlenstoffatomen bedeuten und $R_7$ eine Kohlenwasserstoffgruppe (vorzugweise Alkylen) mit 2 bis 15 Kohlenstoffatomen bedeutet. Besonders bevorzugt sind Acetoacetyl(meth)acrylat, Aceto-acetoxyethyl(meth)acrylat und insbesondere Diacetonacrylamid.

Monomere d):

Die Monomerenmischung kann optional mindestens ein weiteres, von den Monomeren a) bis c) verschiedenes Monomer d) mit einem Anteil von 5 bis 15 Gew.-Prozent bezogen auf die Gesamtmenge an Monomeren a) bis d) enthalten.

Monomere d) sind beispielsweise neutrale bzw. nichtionische Monomere mit erhöhter Wasserlöslichkeit, z.B. die Amide oder die N-Alkylolamide der vorgenannten Carbonsäuren, beispielsweise Acrylamid, Methacrylamid, N-Methylolacrylamid und N-Methylolmethacrylamid, oder Phenyloxyethylglykolmono(meth)acrylat. Weitere Monomere d) sind z.B. auch Hydroxylgruppen enthaltende Monomere, insbesondere die Hydroxyalkylester der vorgenannten alpha, beta-mono- ethylenisch ungesättigten Carbonsäuren, vorzugsweise $C_1$-$C_{10}$-Hydroxyalkyl(meth)acrylate wie z.B. Hydroxyethylacrylat, Hydroxyethylmethacrylat, Hydroxypropylacrylat oder Hydroxypropylmethacrylat sowie 4-Hydroxybutylacrylat. Weitere Monomere d) sind z.B. auch Aminogruppen enthaltende Monomere, insbesondere die Aminoalkylester der vorgenannten alpha, beta-monoethylenisch ungesättigten Carbonsäuren, vorzugsweise $C_1$-$C_{10}$-Aminoalkyl(meth)acrylate wie z.B. 2-Aminoethyl(meth)acrylat oder tert.-Butylaminoethylmethacrylat. Weiterhin kommen als Monomere d) die Nitrile alpha, beta-monoethylenisch ungesättigter Cs-Cs-Carbonsäuren, wie z.B. Acrylnitril oder Methacrylnitril in Betracht. Geeignete Monomere d) sind auch bifunktionelle Monomere, die neben einer ethylenisch ungesättigten Doppelbindung wenigstens eine Glycidyl- gruppe, Oxazolingruppe, Ureidogruppe oder ureidoanaloge Gruppe aufweisen. Beispiele für Monomere mit Glycidylgruppe sind ethylenisch ungesättigte Glycidylether und Glycidylester, z.B. Vinyl-, Allyl- und Methallylglycidylether und Glycidyl(meth)acrylat. Beispiele für Monomere d) sind auch vernetzende Monomere, welche mehr als eine radikalisch polymerisierbare Gruppe aufweisen, insbesondere zwei oder mehr (Meth)acrylatgruppen wie z.B. Butandioldi(meth)acrylat oder Allylmethacrylat. Besonders bevorzugte Monomere d) sind Hydroxyalkyl-(meth)acrylate mit 1 bis 10 Kohlenstoffatomen in der Alkylgruppe.

Verbindung AH

Die im Rahmen der Herstellung des erfindungsgemäßen Schichtaufbaus einzusetzenden Dispersionen enthalten ferner mindestens eine Verbindung AH mit mindestens 2 funktionellen Gruppen, insbesondere 2 bis 5 funktionellen Gruppen, die mit den Keto- oder Aldehydgruppen eine Vernetzungsreaktion eingehen. Verbindungen, die mit den Keto- oder Aldehydgruppen eine Vernetzungsreaktion eingehen können sind z.B. Verbindungen mit Hydrazid-, Hydroxylamin-, Oximether- oder Aminogruppen. Geeignete Verbindungen mit Hydrazidgruppen sind z.B. Polycarbonsäurehydrazide mit einem Molgewicht von vorzugsweise bis zu 500 g/mol. Bevorzugte Hydrazidverbindungen sind Dicarbonsäuredihydrazide mit bevorzugt 2 bis 10 Kohlenstoffatomen. Genannt seien z.B. Oxalsäuredihydrazid, Malonsäuredihydrazid, Bernsteinsäuredihydrazid, Carbodihydrazid, Glutarsäuresäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Besonders bevorzugt sind Adipinsäuredihydrazid, Sebazin- säuredihydrazid und Isophthalsäuredihydrazid. Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid- und Propylenoxid-Addukte von Aminen wie die "Jeffamine", Cyclohexandiamin und Xylylendiamin. Die Verbindung mit den funktionellen Gruppen kann der Zusam- mensetzung, bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein.

Vorzugsweise ist Verbindung AH Adipinsäuredihydrazid und Monomer c) Diacetonacrylamid.

Die Menge der Verbindung AH mit Keto- bzw. Aldehydgruppen reaktiven funktionellen Gruppen wird vorzugsweise so bemessen, dass das Molverhältnis der mit Keto- bzw. Aldehydgruppen reaktiven funktionellen Gruppen zu den Keto- und/oder Aldehydgruppen des Monomers b) 1:10 bis 2:1, insbesondere 1:5 bis 2:1, besonders bevorzugt 1:2 bis 2:1,besonders bevorzugt 1:1.3 bis 1.3:1 und ganz besonders bevorzugt 1: 1.1 bis 1.1:1 beträgt. Insbesondere sind

äquimolare Mengen der funktionellen Gruppen und der Keto- und/oder Aldehydgruppen bevorzugt.

Vorzugsweise sind die Polymerpartikel der im Rahmen der Herstellung des erfindungsgemäßen Schichtaufbaus einzusetzenden Polymerdispersion hergestellt aus Monomeren umfassend

a) 80 bis 90 Gew.-Prozent, bezogen auf die Gesamtmenge an Monomeren a) - d) mindestens eines Monomeren ausgewählt aus der Gruppe bestehend aus Styrol, Methylmethacrylat und Ethylhexylacrylat und Mischungen dieser Monomere und

b) 2 bis 4 Gew.-Prozent, bezogen auf die Gesamtmenge an Monomeren a) - d) Acrylsäure und

c) 1 bis 3 Gew.-Prozent, bezogen auf die Gesamtmenge an Monomeren a) - d) Diacetonacrylamid;

d) 5 bis 15 Gew.-Prozent, bezogen auf die Gesamtmenge an Monomerena) - d) Hydroxyethylmethacrylat.

Vorzugsweise sind die Monomere der Polymerisation so ausgewählt, dass die Glasübergangstemperatur im Bereich von -40°C bis +100°C, insbesondere von -10°C bis +75°C oder von -10°C bis +60°C liegt.

Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. I I] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/Tg = XVTg1 + X2/Tg2 + .... X''/Tg'',$$

wobei x1 , x2, .... xn die Massenbrüche der Monomeren 1, 2, .... n und Tg1, Tg2, .... Tg n die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1 st Ed., J. Wiley, New York 1966, 2nd Ed. J. Wiley, New York 1975, und 3rd Ed. J. Wiley, New York 1989.

In einer Ausführungsform des erfindungsgemäßen Schichtaufbaus wird bei der Polymerisation für die Herstellung der Polyacrylat-Grundierung (AG) in Form einer wässrigen Polymerdispersion mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0.05 bis 4 Gew.-Teile, besonders bevorzugt 0.05 bis 0.8 Gew.-Teile und ganz besonders bevorzugt 0.1 bis 0.6 Gew.-Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol. Bevorzugt sind 2-Ethylhexylthioglycolat (EHTG), Isooctyl-3-mercaptopropionat (IOMPA) und tert.-Dodecylmercaptan (tDMK).

Die Polymerisation erfolgt bevorzugt saatkontrolliert, d.h. in Gegenwart von Polymersaat (Saatlatex). Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0.01 bis 0.5 Gew.-Teilen, besonders bevorzugt von 0.03 bis 0.3 Gew.-Teilen, bezogen auf 100 Gewichtsteile Monomere. Geeignet ist z.B. ein Latex auf Basis von Polystyrol oder auf Basis von Polymethylmethacrylat. Ein bevorzugter Saatlatex ist Polystyrolsaat. Die Herstellung der im erfindungsgemäßen Schichtaufbau enthaltenden Polymerdispersion erfolgt durch Emulsionspolymerisation. Bei der Emulsionspolymerisation werden ethylenisch ungesättigte Verbindungen (Monomere) in Wasser polymerisiert, wobei üblicherweise ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Vorzugsweise erfolgt aber die Polymerisation emulgatorarm und ohne Zusatz oder Bildung von Schutzkolloiden. Die Stabilisierung der entstehenden Polymerdispersion kann durch eine spezielle Fahrweise erfolgen. Diese beruht auf einem langsamen anfänglichen Monomerzulauf in Gegenwart von sehr geringer Menge an Polymersaat (Saatkontrolle), gefolgt von der Neutralisation der verwendeten Säuremonomeren im Verlauf oder nach der Polymerisation.

Die Neutralisation von Säuregruppen des Polymerisats erfolgt vorzugsweise durch Zulauf eines Neutralisationsmittels während oder nach der Polymerisation, wobei die Säuregruppen ganz oder teilweise durch Zulauf einer Base

neutralisiert werden. Das Neutralisationsmittel kann z.B. in einem separaten Zulauf parallel zum Zulauf der Monomermischung zugegeben werden. Nach Zulauf sämtlicher Monomere ist vorzugsweise die zur Neutralisation von mindestens 10%, vorzugsweise 10 bis 100% oder 25 bis 90% Säureäquivalenten benötigte Menge an Neutralisationsmittel in dem Polymerisationsgefäß enthalten. Das besonders bevorzugte Neutralisationsmittel ist Ammoniak.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations-(Red-Ox-)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit. Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0.1 bis 30 Gew.-Prozent, bevorzugt 0.5 bis 20 Gew.-Prozent, besonders bevorzugt 1.0 bis 10 Gew.-Prozent, bezogen auf die zu polymerisierenden Monomeren. Es können auch mehrere, verschiedene Initiatoren bei der Emulsionspolymerisation Verwendung finden.

Die Emulsionspolymerisation erfolgt vorzugsweise bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann in Form eines Zulaufverfahrens, einschließlich Stufen- oder Gradientenfahrweise zur Erzeugung von mehrphasigen Polymeren, durchgeführt werden, wie dies Beispielsweise in der EP2389397A1 und dort zitierten Dokumenten beschrieben wird. Bei der Polymerisation kann zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95% Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-Prozent, bevorzugt von 40 bis 60 Gew.-Prozent, besonders bevorzugt größer oder gleich 50 Gew.-Prozent erhalten.

Der pH-Wert der Polymerdispersion wird vorzugsweise auf pH größer 5, insbesondere auf einen pH-Wert zwischen 5.5 und 8 eingestellt.

Optional kann die Polyacrylat-Grundierung (AG) weitere Stoffe enthalten, beispielsweise Lösemittel, wässrige Polyurethandispersionen, Dispersionen von silanisierten Styrol-Acrylat-Copolymeren, Vinylidenchlorid-Polymeren bzw. Acrylat-Vinylidenchlorid Copolymeren, Paraffinwachsen sowie weitere übliche Hilfsstoffe. Übliche Hilfsstoffe sind beispielsweise Netzmittel, Verdicker, Lichtschutzstabilisatoren, Biozide, Entschäumer usw.

Die Polyacrylat-Grundierungen (AG) weisen eine Mindestfilmbildungstemperatur (gemessen an einer Filmbildebank mit Temperaturgefälle, DIN ISO 2115:2001-04) von <30 °C, bevorzugt <15 °C besonders bevorzugt <5 °C auf.

Um eine geeignete Mindestfilmbildungstemperatur zu erreichen können die bei Beschichtungsmitteln üblichen Lösemittel bzw. Colösemittel, beispielweise n-Butoxypropanol, Dipropylenglycolmethylether zugesetzt werden, welche nach der Applikation verdunsten oder es können weitere Polymerdispersionen zugesetzt werden.

In einer Ausführungsform weist die Polyacrylat-Grundierung (AG) einen Anteil von Lösemitteln im Sinne der TRGS 610, Ausgabe: Januar 2011, Abschnitt 2.5 von weniger als 1% auf. (Abschnitt 2.5 der genannten Richtlinie definiert Lösemittel wie folgt: Lösemittel sind flüchtige organische Stoffe sowie deren Mischungen mit einem Siedepunkt ≤ 200°C, die bei Normalbedingungen (20°C und 101,3 kPa) flüssig sind und dazu verwendet werden, andere Stoffe zu lösen oder zu verdünnen, ohne sie chemisch zu verändern.)

In einer bevorzugten Ausführungsform weist die Polyacrylat-Grundierung (AG) einen Anteil von Lösemitteln

im Sinne der TRGS 610, Ausgabe: Januar 2011, Abschnitt 2.5 von weniger als 1% auf und enthält eine Polyurethandispersion mit einer Mindestfilmbildungstemperatur von kleiner als 5°C.

In einer besonders bevorzugten Ausführungsform weist die Polyacrylat-Grundierung (AG) einen Anteil von Lösemitteln im Sinne der TRGS 610, Ausgabe: Januar 2011, Abschnitt 2.5 von weniger als 1% auf und enthält eine Polyurethandispersion mit einer Mindestfilmbildungstemperatur von kleiner als 5°C und einem Gehalt an Ketonen oder Aldehyden von kleiner 1 Gew.-Prozent.

In einer ganz besonders bevorzugten Ausführungsform weist die Polyacrylat-Grundierung (AG) einen Anteil von Lösemitteln im Sinne der TRGS 610, Ausgabe: Januar 2011, Abschnitt 2.5 von weniger als 1% auf und enthält eine Polyetherurethandispersion mit einer Mindestfilmbildungstemperatur von kleiner als 5 °C.

In einer weiteren Ausführungsform können der Polyacrylat-Grundierung (AG) weitere Verbindungen X3Y3 zugegeben werden, die mit weiteren ggf. vorhandenen reaktiven Gruppen in der wässrigen Polymerdispersion reagieren können.

Beispielsweise sind diese Verbindungen X3Y3, Verbindungen, die Carbodiimidgruppen enthalten (Carbodiimidvernetzer), welche beispielsweise mit ggf. in der Polymerdispersion vorliegenden Carbonsäuregruppen reagieren können. Bevorzugt werden diese Verbindungen X3Y3 in solchen Mengen zugegeben, dass für jede ggf. in der Polymerdispersion vorliegende Carbonsäuregruppen 1.5 bis 2.5 Carbodiimidgruppen vorliegen.

Beispielsweise sind diese Verbindungen X3Y3 Verbindungen, die Isocyanatgruppen enthalten (Isocyanatvernetzer), welche beispielsweise mit ggf. in der Polymerdispersion vorliegenden isocyanatreaktiven Gruppen (z.B. Hydroxylgruppen) reagieren können. Bevorzugt werden diese Verbindungen XY in solchen Mengen zugegeben, dass für jede ggf. in der Polymerdispersion vorliegende isocyanatreaktive Gruppe 1 bis 3 Isocyanatgruppen vorliegen. Geeignete Verbindungen XY, welche Isocyanatgruppen enthalten sind hydrophilierte aromatische oder aliphatische Polyisocyanate wie sie in Ulrich Meier-Westhues, Polyurethane Lacke, Kleb- und Dichtstoffe, Vinzenz Hannover, 2007 Kapitel 3.6 beschrieben sind. Solche Verbindungen sind beispielsweise von Covestro Deutschland unter dem Handelsnamen Bayhydur® verfügbar,

Erfindungsgemäß verwendbar sind die Polyacrylat-Grundierungen (AG) für bauseitig vorliegende Untergründe, wie Estrichen oder Holzoberflächen in Kombination mit silanmodifizierten Polymerklebstoffen für die Klebung von Holz-, Kork-, Linoleum-, Kautschuk- und/oder PVC-Böden. Besonders bevorzugt handelt es sich bei den Untergründen um poröse Untergründe, insbesonders Zementestriche und bei dem Böden um Holzböden.

Die Polyacrylat-Grundierungen (AG) weisen eine sehr gute Haftung zu bauseitig vorliegenden Untergründen auf, die noch Restmengen an Wasser enthalten können.

Die Zusammensetzung auf Basis silanmodifizierter Polymere (KS) wird erfindungsgemäß nach dem Auftragen der Polyacrylat-Grundierungen (AG) auf den bauseitig vorliegenden Untergrund auf die Polyacrylat-Grundierung (AG) appliziert. Bevorzugt erfolgt die Applizierung der Zusammensetzung auf Basis silanmodifizierter Polymere (KS) erst zwischen 1-72 h, bevorzugt 1-48h, besonders bevorzugt 2-24h nach Auftragung der Polyacrylat-Grundierung (AG). D.h. die durch Auftragung der Polyacrylat Grundierung AG erzeugte wässrige Schicht wird für diesen Zeitraum "gelagert". Im Laufe dieser Lagerung trocknet die Dispersion zu einem Polymerfilm. Die Trockung der Polyacrylat Grundierung (AG) wird durch gute Belüftung und/oder bei niedriger relativer Luftfeuchte (z.B. trockene warme Luft) beschleunigt.

Die Applikation der Polyacrylat-Grundierungen (AG) kann beispielsweise mit einer Mikrofaser-Lackwalze einer Nylon-Plüsch-Rolle oder anderen zum Aufbringen von Beschichtungsmitteln geeigneten Methoden erfolgen.

Die Applikation der Zusammensetzung auf Basis silanmodifizierter Polymere (KS) erfolgt beispielsweise nach den bekannten Methoden für die Klebung von Bodenbelägen. Diese sind beispielsweise in den TKB-Merkblättern des Industrieverbands-Klebstoffe beschrieben. https://www.klebstoffe.com/die-welt-des-klebens/informationen/publikationen/merkblaetter/ bauklebstoffe-verlegewerkstoffe.html

Erfindungsgemäß kann die Zusammensetzung auf Basis silanmodifizierter Polymere (KS) bereits nach 1h nach Aufbringen der Polyacrylat-Grundierung (AG) aufgetragen werden ohne dass eine Weichmacherunbeständigkeit in Form von Anlösen der Grundierung und/oder Haftungsprobleme (Adhäsives Versagen bei Zug- oder Schubbelastung) erkennbar ist.

Erfindungsgemäß kann die Zusammensetzung auf Basis silanmodifizierter Polymere (KS) auch bis zu 72h nach Aufbringen der Polyacrylat-Grundierung (AG) aufgetragen werden ohne dass es zu Haftungsproblemen (Adhäsives Versagen bei Zug- oder Schubbelastung) zwischen der Grundierung und dem Klebstoff kommt.

Besonders überraschend ist, dass im Rahmen der vorliegenden Erfindung des Schichtaufbaus keine Reaktion von bei der Applikation der Zusammensetzung auf Basis silanmodifizierter Polymere (KS) noch vorhandenen Isocyanatgruppen in der Polyacrylat-Grundierung (AG) mit isocyanatreaktiven Gruppen, welche in der Zusammensetzung auf Basis silanmodifizierter Polymere (KS) enthalten sind oder bei der Aushärtung abgespalten werden, erkennbar sind.

Gegenstand der vorliegenden Erfindung ist ein Schichtaufbau umfassend mindestens eine aus einer Polyacrylat-Grundierung (AG) erhältliche Grundierschicht (G) und mindestens eine darauf applizierte Zusammensetzung auf Basis silanmodifizierter Polymere (KS).

Ein bevorzugter Gegenstand der vorliegenden Erfindung ist der oben offenbarte Schichtaufbau umfassend

mindestens eine aus einer Polyacrylat-Grundierung (AG) erhältliche Grundierschicht (G), dadurch gekennzeichnet, dass die Polyacrylat-Grundierung (AG) in Form einer wässrigen Polymerdispersion vorliegt, wobei diese wässrige Polymerdispersion in Wasser dispergierte Polymerpartikel enthält und herstellbar ist durch radikalische Polymerisation von Monomeren enthaltend

a) mindestens 50 Gew.-Prozent, bezogen auf die Gesamtmenge an Monomeren a) bis d), mindestens eines Monomeren ausgewählt aus der Gruppe bestehend aus $C_1$- bis $C_{20}$-Alkylacrylaten, $C_1$-bis $C_{20}$-Alkylmethacrylaten, Vinylestern von bis zu 20 Kohlenstoff-atomen enthaltenden Carbonsäuren, Vinylaromaten mit bis zu 20 Kohlenstoffatomen, Vinylhalogeniden, Vinylethern von 1 bis 10 Kohlenstoffatome enthaltenden Alkoholen, aliphatischen Kohlenwasserstoffen mit 2 bis 8 Kohlenstoffatomen und ein oder zwei Doppelbindungen und Mischungen dieser Monomere und

b) mindestens 0.1 Gew.-Prozent, bezogen auf die Gesamtmenge an Monomeren a) bis d), mindestens eines Monomeren mit mindestens einer Säuregruppe und Mischungen dieser Monomere, und

c) mindestens 0.1 bis 5 Gew.-Prozent, bezogen auf die Gesamtmenge an Monomeren a) bis d), mindestens einer ethylenisch ungesättigten Verbindung mit mindestens einer funktionellen Gruppe, ausgewählt aus Ketogruppen und Aldehydgruppen,

wobei die wässerige Polymerdispersion zusätzlich zu den in Wasser dispergierten Polymerpartikeln mindestens eine Verbindung AH enthält, welche mindestens zwei funktionelle Gruppen aufweist, die mit den Ketogruppen oder mit den Aldehydgruppen eine Vernetzungsreaktion eingehen können,

wobei das Molverhältnis der mit Ketogruppen oder mit Aldehydgruppen reaktiven Gruppen der Verbindung AH zu den Keto- und Aldehydgruppen des Monomers b) 1:10 bis 2:1 beträgt,

d) optional weitere Monomere

und
mindestens eine auf der Grundierschicht (G) applizierte härtbare Zusammensetzung auf Basis silanmodifizierter Polymere (KS), dadurch gekennzeichnet, dass die silanmodifizierten Polymere mindestens eine Endgruppe der allgemeinen Formel (I)

$$-A_n\text{-}R\text{-}SiVYZ \qquad (I),$$

in welcher

A für eine zweibindige, mindestens ein Heteroatom enthaltende Bindegruppe steht,

R für einen zweibindigen Kohlenwasserstoffrest mit 1-12 Kohlenstoff-Atomen steht,

V, Y, Z für Substituenten am Si-Atom stehen, die unabhängig voneinander für $C_1$-$C_8$-Alkyl-, Ci-Cs-Alkoxy- oder Ci-Cs-Acyloxygruppen stehen, wobei mindestens einer der Reste V, Y, Z für eine $C_1$-$C_8$-Alkoxy- oder $C_1$-$C_8$-Acyloxygruppe steht, und

n für 0 oder 1 steht,

enthalten ist.

Ein besonders bevorzugter Gegenstand der vorliegenden Erfindung ist der oben offenbarte Schichtaufbau enthaltend mindestens eine aus einer Polyacrylat-Grundierung (AG) erhältliche Grundierschicht (G), dadurch gekennzeichnet, dass die Polyacrylat-Grundierung (AG) in Form einer wässrigen Polymerdispersion vorliegt, wobei diese wässrige Polymerdispersion in Wasser dispergierte Polymerpartikel enthält, und herstellbar ist durch radikalische Polymerisation von Monomeren enthaltend

a) 50 bis 90 Gew.-Prozent, bezogen auf die Gesamtmenge an Monomeren a) bis d), mindestens eines Monomeren ausgewählt aus der Gruppe Methylmethacrylat, Methylacrylat, Butylacrylat, n-Butylacrylat, Ethylacrylat, 2-Ethylhexylacrylat, 2-Propylheptylacrylat, n-Hexylacrylat, n-Octylacrylat, Hexylacrylat, Octylacrylat, Benzenyl(meth)acrylat, Isobutylacrylat, tert.-Butyl(meth)acrylat, Cyclohexyl(meth)acrylat, Vinyllaurat, Vinylstearat, Vinylpropionat, Versaticsäurevinylester, Vinylacetat, Vinyltoluol, alpha- und para-Methylstyrol, Styrol, alpha-Butylstyrol, 4-n-Butylstyrol, 4-n-Decylstyrol, Vinylchlorid, Vinylidenchlorid, Vinylmethylether und Vinylisobutylether und Mischungen dieser Monomere und

b) 0.5 bis 5 Gew.-Prozent, bezogen auf die Gesamtmenge an Monomeren a) bis d), mindestens eines Monomeren mit mindestens einer Säuregruppe ausgewählt aus der Gruppe alpha, beta-monoethylenisch ungesättigte Mono- und Dicarbonsäuren, Halbester von alpha, beta-monoethylenisch ungesättigten Dicarbonsäuren, die Anhydride der vorgenannten alpha, beta-monoethylenisch ungesättigten Carbonsäuren sowie ethylenisch ungesättigte Sulfonsäuren, Phosphonsäuren oder Dihydrogenphosphate und deren wasserlösliche Salze und Mischungen dieser Monomere und

c) 0.2 bis 5 Gew.-Prozent, bezogen auf die Gesamtmenge an Monomeren a) bis d), mindestens einer ethylenisch ungesättigten Verbindung mit mindestens einer funktionellen Gruppe, ausgewählt aus Ketogruppen und Aldehydgruppen ausgewählt aus der Gruppe Acrolein, Methacrolein, Vinylalkylketone mit 1 bis 20, Formylstyrol, (Meth)acrylsäurealkylester mit ein oder zwei Keto- oder Aldehydgruppen, bzw. einer Aldehyd- und einer Ketogruppe im Alkylrest wobei der Alkylrest vorzugsweise insgesamt 3 bis 10 Kohlenstoffatome umfasst, N-Oxoalkyl(meth)acrylamide der Formel $R_6$-C(=O)-$R_7$-NH-C(=O)-$CR_8$=$CH_2$, wobei $R_6$ und $R_8$ unabhängig voneinander Wasserstoff oder eine Kohlenwasserstoffgruppe mit 1 bis 10 Kohlenstoffatomen bedeuten und $R_7$ eine Kohlenwasserstoffgruppe mit 2 bis 15 Kohlenstoffatomen bedeutet,

wobei die wässerige Polymerdispersion zusätzlich zu den in Wasser dispergierten Polymerpartikeln mindestens eine Verbindung AH enthält, welche mindestens zwei funktionelle Gruppen aufweist, die mit den Ketogruppen oder mit den Aldehydgruppen eine Vernetzungsreaktion eingehen können, ausgewählt aus der Gruppe Oxalsäuredi-hydrazid, Malonsäuredihydrazid, Bernsteinsäuredihydrazid, Carbodihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid, Isophthalsäuredihydrazid., Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid- und Propylenoxid-Addukte von Aminen wie die "Jeffamine", Cyclohexandiamin und Xylylendiamin,

wobei das Molverhältnis der mit Ketogruppen oder mit Aldehydgruppen reaktiven Gruppen der Verbindung AH zu den Keto- und Aldehydgruppen des Monomers b) 1:10 bis 2:1 beträgt,

d) optional weitere Monomere d) mit einem Anteil Anteil von 5 bis 15 Gew.-Prozent bezogen auf die Gesamtmenge an Monomeren a) bis d), ausgewählt aus der Gruppe Acrylamid, Methacrylamid, N-Methylolacrylamid, N-Methylolmethacrylamid, oder Phenyloxyethylglykolmono(meth)acrylat, Hydroxyethylacrylat, Hydroxyethylmethacrylat, Hydroxypropylacrylat, Hydroxypropylmethacrylat, 4-Hydroxybutylacrylat, 2-Aminoethyl(meth)acrylat, tert.-Butylaminoethylmethacrylat, Acrylnitril, Methacrylnitril, Vinyl-, Allyl- und Methallylglycidylether und Glycidyl(meth)acrylat, Butandioldi(meth)acrylat, Allylmethacrylat und Hydroxyalkyl-(meth)acrylate mit 1 bis 10 Kohlenstoffatomen in der Alkylgruppe,

und
mindestens eine auf der Grundierschicht (G) applizierte härtbare Zusammensetzung auf Basis silanmodifizierter Polymere (KS), dadurch gekennzeichnet, dass die silanmodifizierten Polymere mindestens eine Endgruppe der allgemeinen Formel (I), in welcher

A für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,

R für einen zweibindigen Kohlenwasserstoffrest mit 1-6 Kohlenstoffatomen steht,

V, Y, Z für Substituenten am Si-Atom und jeweils unabhängig voneinander für eine Methyl-, Ethyl-, Methoxy- oder Ethoxygruppe stehen, wobei mindestens einer der Reste V, Y oder Z für eine Methoxy- oder Ethoxygruppe steht,

n für 0 oder 1 steht,

enthalten ist.

Ein ganz besonders bevorzugter Gegenstand der vorliegenden Erfindung ist ein oben offenbarte Schichtaufbau enthaltend mindestens eine aus einer Polyacrylat-Grundierung (AG) erhältliche Grundierschicht (G)), dadurch gekennzeichnet, dass die Polyacrylat-Grundierung (AG) in Form einer wässrigen Polymerdispersion vorliegt, wobei diese wässrige Polymerdispersion in Wasser dispergierte Polymerpartikel enthält, und herstellbar ist durch radikalische Polymerisation von Monomeren enthaltend

a) 80 bis 90 Gew.-Prozent, bezogen auf die Gesamtmenge an Monomeren a) bis d), mindestens eines Monomeren ausgewählt aus der Gruppe Methylmethacrylat, Ethylacrylat, und Styrol und Mischungen dieser Monomere und

b) 0.5 bis 3.5 Gew.-Prozent, bezogen auf die Gesamtmenge an Monomeren a) bis d), mindestens eines Monomeren mit mindestens einer Säuregruppe ausgewählt aus der Gruppe Itaconsäure, Acrylsäure und Methacrylsäure und Mischungen dieser Monomere und

c) 1 bis 3 Gew.-Prozent, bezogen auf die Gesamtmenge an Monomeren a) bis d), mindestens einer ethylenisch ungesättigten Verbindung mit mindestens einer funktionellen Gruppe, ausgewählt aus Ketogruppen und Aldehydgruppen ausgewählt aus der Gruppe Acetoacetyl(meth)acrylat, Aceto-acetoxyethyl(meth)acrylat und Diacetonacrylamid,

wobei die wässerige Polymerdispersion zusätzlich zu den in Wasser dispergierten Polymerpartikeln mindestens eine Verbindung AH enthält, welche mindestens zwei funktionelle Gruppen aufweist, die mit den Ketogruppen oder mit den Aldehydgruppen eine Vernetzungsreaktion eingehen können, ausgewählt aus der Gruppe Oxalsäuredihydrazid, Malonsäuredihydrazid, Bernsteinsäuredihydrazid, Carbodihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid, Isophthalsäuredihydrazid., Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid- und Propylenoxid-Addukte von Aminen wie die "Jeffamine", Cyclohexandiamin und Xylylendiamin,

wobei das Molverhältnis der mit Ketogruppen oder mit Aldehydgruppen reaktiven Gruppen der Verbindung AH zu den Keto- und Aldehydgruppen des Monomers b) 1:10 bis 2:1 beträgt,

d) optional weitere Monomere d) mit einem Anteil von 5 bis 15 Gew.-Prozent bezogen auf die Gesamtmenge an Monomeren a) bis d), ausgewählt aus der Gruppe Acrylamid, Methacrylamid, N-Methylolacrylamid, N-Methylolmethacrylamid, oder Phenyloxyethylglykolmono(meth)acrylat, Hydroxyethylacrylat, Hydroxyethylmethacrylat, Hydroxypropylacrylat, Hydroxypropylmethacrylat, 4-Hydroxybutylacrylat, 2-Aminoethyl(meth)acrylat, tert.-Butylaminoethylmethacrylat, Acrylnitril, Methacrylnitril, Vinyl-, Allyl- und Methallylglycidylether und Glycidyl(meth)acrylat, Butandioldi(meth)acrylat, Allylmethacrylat und Hydroxyalkyl-(meth)acrylate mit 1 bis 10 Kohlenstoffatomen in der Alkylgruppe,

und

mindestens eine auf der Grundierschicht (G) applizierte härtbare Zusammensetzung auf Basis silanmodifizierter Polymere (KS), dadurch gekennzeichnet, dass die silanmodifizierten Polymere mindestens eine Endgruppe der allgemeinen Formel (I), in welcher

A für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,

R für einen zweibindigen Kohlenwasserstoffrest mit 1-6 Kohlenstoffatomen steht,

V, Y, Z für Substituenten am Si-Atom und jeweils unabhängig voneinander für eineMethyl-, Ethyl-, Methoxy- oder Ethoxygruppe stehen, wobei mindestens einer der Reste V, Y oder Z für eine Methoxy- oder Ethoxygruppe steht,

n für 0 oder 1 steht,

enthalten ist.

Ein ebenfalls bevorzugter Gegenstand der vorliegenden Erfindung ist der oben offenbarte Schichtaufbau enthaltend mindestens eine aus einer Polyacrylat-Grundierung (AG) erhältliche Grundierschicht (G), dadurch gekennzeichnet, dass die Polyacrylat-Grundierungen (AG) einen Anteil von Lösemitteln im Sinne der TRGS 610, Ausgabe: Januar 2011, Abschnitt 2.5 von weniger als 1% aufweist.

Ein ebenfalls bevorzugter Gegenstand der vorliegenden Erfindung ist der oben offenbarte Schichtaufbau enthaltend mindestens eine aus einer Polyacrylat-Grundierung (AG) erhältliche Grundierschicht (G), dadurch gekennzeichnet, dass die Polyacrylat-Grundierungen (AG) eine Polyetherurethandispersion mit einer Mindestfilmbildungstemperatur von kleiner als 5°C enthält.

Ein ebenfalls bevorzugter Gegenstand der vorliegenden Erfindung ist der oben offenbarte Schichtaufbau enthaltend mindestens eine aus einer Polyacrylat-Grundierung (AG) erhältliche Grundierschicht (G), dadurch gekennzeichnet, dass die Polyacrylat-Grundierungen (AG) weitere Verbindungen X3Y3 enthält, die mit vorhandenen reaktiven Gruppen in der wässrigen Polymerdispersion reagieren können, ausgewählt aus der Gruppe von Verbindungen, die Carbodiimidgruppen enthalten (Carbodiimidvernetzer), welche mit in der Polymerdispersion vorliegenden Carbonsäuregruppen reagieren können.

Ein ebenfalls bevorzugter Gegenstand der vorliegenden Erfindung ist der oben offenbarte Schichtaufbau enthaltend mindestens eine aus einer Polyacrylat-Grundierung (AG) erhältliche Grundierschicht (G), dadurch gekennzeichnet, dass die Grundierschicht durch eine 1- bis 72-stündige Lagerung einer unter Verwendung der Polyacrylat-Grundierung (AG) erzeugten wässrigen Schicht erhalten wird.

Ein weiterer Gegenstand der vorliegenden Erfindung ist ein Schichtsystem umfassend mindestens eine der oben offenbarten Schichtaufbauten umfassend mindestens eine aus einer Polyacrylat-Grundierung (AG) erhältliche Grundierschicht (G) und darauf applizierte härtbare Zusammensetzung auf Basis silanmodifizierter Polymere (KS).

Ein weiterer Gegenstand der vorliegenden Erfindung ist ein Schichtsystem umfassend mindestens eine der oben offenbarten Schichtaufbauten umfassend mindestens eine aus einer Polyacrylat-Grundierung (AG) erhältliche Grundierschicht (G) und darauf applizierte härtbare Zusammensetzung auf Basis silanmodifizierter Polymere (KS) und darauf verklebtem Substrat, beispielsweise Bodenbelag.

Ein weiterer Gegenstand der vorliegenden Erfindung ist ein Verfahren zum Kleben von Bodenbelägen auf vorbehandelten Untergründen unter Verwendung mindestens einer der oben offenbarten Schichtaufbauten umfassend mindestens eine aus einer Polyacrylat-Grundierung (AG) erhältliche Grundierschicht (G) als Vorbehandlung und mindestens einer härtbare Zusammensetzung auf Basis silanmodifizierter Polymere (KS) als Klebstoff.

Ein weiterer bevorzugter Gegenstand der vorliegenden Erfindung ist das oben offenbarte Verfahren, dadurch gekennzeichnet, dass die Polyacrylat-Grundierung (AG) einschichtig aufgetragen wird.

Ein weiterer ganz besonders bevorzugter Gegenstand der vorliegenden Erfindung ist das oben offenbarte Verfahren, dadurch gekennzeichnet, dass auf den Untergrund zuerst eine Polyacrylat-Grundierung (AG) aufgebracht wird und nachfolgend der Bodenbelag mit mindestens einer härtbare Zusammensetzung auf Basis silanmodifizierter Polymere (KS) auf den so vorbehandelten Untergrund geklebt wird, dadurch gekennzeichnet, dass die härtbare Zusammensetzung auf Basis silanmodifizierter Polymere (KS) zwischen 1-72 h, bevorzugt 1-48h, besonders bevorzugt 2-24h nach dem Aufbringen der Polyacrylat-Grundierung (AG) aufgebracht wird.

Ein weiterer Gegenstand der vorliegenden Erfindung ist die Verwendung mindestens einer der oben offenbarten Schichtaufbauten umfassend mindestens eine aus einer Polyacrylat-Grundierung (AG) erhältliche Grundierschicht (G) und mindestens eine härtbare Zusammensetzung auf Basis silanmodifizierter Polymere (KS) bei der Verklebung eines Bodenbelags auf einem Untergrund.

Ein weiterer bevorzugter Gegenstand der vorliegenden Erfindung ist die oben offenbarte Verwendung mindestens einer der oben offenbarten Schichtaufbauten umfassend mindestens eine aus einer Polyacrylat-Grundierung (AG) erhältliche Grundierschicht (G) und mindestens eine härtbare Zusammensetzung auf Basis silanmodifizierter Polymere (KS) bei der bei der Abdichtung von Fugen, beispielsweise Bauwerksfugen, Fugen zwischen Fasssadenelementen.

Ein weiterer Gegenstand der vorliegenden Erfindung ist ein Kit-of-parts enthaltend mindestens eine der oben offenbarten Polyacrylat-Grundierungen (AG) bzw. mindestens eine aus einer Polyacrylat-Grundierung (AG) erhältliche Grundierschicht (G) und mindestens eine der oben offenbarten härtbaren Zusammensetzungen auf Basis silanmodifizierter Polymere (KS).

Ein weiterer bevorzugter Gegenstand der vorliegenden Erfindung ist das oben offenbarte Kit-of-parts für die Verwendung zum Aufbau eines Schichtsystems.

Ein weiterer Gegenstand der vorliegenden Erfindung ist das oben offenbartes Kit-of-parts für die Verklebung eines Bodenbelags auf einem Untergrund.

Ein weiterer Gegenstand der vorliegenden Erfindung ist das oben offenbarte Kit-of-parts gemäß für die Abdichtung von Fugen.

Ein weiterer Gegenstand der vorliegenden Erfindung ist das oben angegebene Verfahren zum Kleben von Bodenbelägen auf vorbehandelten (grundierten) Untergründen unter Verwendung mindestens einer der oben angegebenen Schichtaufbauten umfassend mindestens eine aus einer Polyacrylat-Grundierung (AG) erhältliche Grundierschicht (G) als Vorbehandlung und mindestens eine härtbare Zusammensetzung auf Basis silanmodifizierter Polymere (KS) als Klebstoff, dadurch gekennzeichnet, dass die Polyacrylat-Grundierung (AG) einschichtig aufgetragen wird.

Ein weiterer Gegenstand der vorliegenden Erfindung ist das oben angegebene Verfahren zum Kleben von Bodenbelägen auf vorbehandelten Untergründen unter Verwendung mindestens einer der oben angegebenen Schichtaufbauten umfassend mindestens eine aus einer Polyacrylat-Grundierung (AG) erhältliche Grundierschicht (G) als Vorbehandlung und mindestens eine härtbare Zusammensetzung auf Basis silanmodifizierter Polymere (KS) als Klebstoff, dadurch gekennzeichnet, dass auf den Untergrund zuerst eine Polyacrylat-Grundierung (AG) aufgebracht wird und nachfolgend der Bodenbelag mit mindestens einer härbaren Zusammensetzung auf Basis silanmodifizierter Polymere (KS) auf den so vorbehandelten Untergrund geklebt wird, dadurch gekennzeichnet, dass die härtbare Zusammensetzung auf Basis silanmodifizierter Polymere (KS) zwischen 1-72 h, bevorzugt 1-48h, besonders bevorzugt 2-24h nach dem Aufbringen der Polyacrylat-Grundierung aufgebracht wird.

Bevorzugt weisen die Substrate, auf die die Polyacrylat-Grundierung (AG) appliziert wird bei Applikation eine Oberflächentemperatur zwischen 5 und 35 Grad C auf.

Ein weiterer Gegenstand der vorliegenden Erfindung ist ein Schichtsystem umfassend einen Untergrund, mindestens eine aus einer Polyacrylat-Grundierung (AG) erhältliche Grundierschicht (G), mindestens eine darauf applizierte härtbare Zusammensetzung auf Basis silanmodifizierter Polymere (KS) und darauf verklebter Bodenbelag, erhältlich nach dem oben beschriebenen Verfahren.

Ein weiterer Gegenstand der vorliegenden Erfindung ist ein Schichtsystem umfassend einen Untergrund, mindestens eine aus einer Polyacrylat-Grundierung (AG) erhältliche Grundierschicht (G), mindestens eine darauf applizierte härtbare Zusammensetzung auf Basis silanmodifizierter Polymere (KS) und darauf verklebter Bodenbelag, wobei die Polyacrylat-Grundierung (AG) und die härtbare Zusammensetzung auf Basis silanmodifizierter Polymere (KS) der vorangegangenen Beschreibung entspricht.

Ein weiterer Gegenstand der vorliegenden Erfindung ist die Verwendung mindestens einer der oben angegebenen Schichtaufbauten umfassend mindestens eine aus einer Polyacrylat-Grundierung (AG) erhältliche Grundierschicht (G) und mindestens eine härtbare Zusammensetzung auf Basis silanmodifizierter Polymere (KS) bei der Verklebung eines Bodenbelags auf einem Untergrund.

Als Untergrund kommen insbesondere die im Innenausbau üblichen Untergründe in Frage. Dabei handelt es sich beispielsweise um Beton, Zement, Zementestrich, Zementfließestrich, Zementmörtel, zementgebundene Holzfaser, Keramik, Naturstein, Calciumsulfatestrich, Calciumsulfatfließestrich, Magnesitestrich, Holz, Holzwerkstoff, Sperrholz, Kork, Gips, Gipsfaser, Gipskarton, Hartfaser, mineralische Spachtelmasse, textiles faserartiges Material oder eine Schichtaufbau dieser Materialien.

Als Bodenbelag kommen beispielsweise Linoleum-Beläge, PVC-Beläge, Kautschukbeläge, Gummibeläge, textile Bodenbeläge, Laminat oder Holzbelagelemente in Frage. In einer bevorzugten Ausführungsform handelt es sich bei dem Bodenbelag um einen Holzbelag, insbesondere Parkett, ganz besonders Massivparkett.

Ein weiterer Gegenstand der vorliegenden Erfindung ist die Verwendung mindestens einer der oben angegebenen Schichtaufbauten umfassend mindestens eine aus einer Polyacrylat-Grundierung (AG) erhältliche Grundierschicht (G)und mindestens eine härtbare Zusammensetzung auf Basis silanmodifizierter Polymere (KS) bei der bei der Abdichtung von Fugen, beispielsweise Bauwerksfugen, Fugen zwischen Fasssadenelementen. Hierbei kann die Polyacrylat-Grundierung (AG) auf nur einem Substrat oder auf beiden, die Fuge bildenden Substrate, aufgebracht werden.

Ein weiterer Gegenstand der vorliegenden Erfindung ist ein Verfahren zum Abdichten von Fugen zwischen 2 Substraten unter Verwendung mindestens einer der oben offenbarten Schichtaufbauten, umfassend mindestens eine aus einer Polyacrylat-Grundierung (AG) erhältliche Grundierschicht (G) als Vorbehandlung und mindestens eine härtbare Zusammensetzung auf Basis silanmodifizierter Polymere (KS) als Dichtmasse.

Ein weiterer Gegenstand der vorliegenden Erfindung ist das oben beschriebene Verfahren, dadurch gekennzeichnet, dass zuerst eine Polyacrylat-Grundierung (AG) auf wenigstens eine der beiden Oberflächen einer durch 2 Substrate gebildeten Fuge aufgebracht wird und nachfolgend mindestens eine härtbare Zusammensetzung auf Basis silanmodifizierter Polymere (KS) als Dichtmasse in die Fuge eingebracht wird, dadurch gekennzeichnet, dass die härtbare Zusammensetzung auf Basis silanmodifizierter Polymere (KS) zwischen 1-72 h, bevorzugt 1-48h, besonders bevorzugt 2-24h nach dem Aufbringen der Polyacrylat-Grundierung auf die Oberfläche bzw. -flächen der Fuge eingebracht wird.

"In die Fuge eingebracht wird" bedeutet im Falle, in dem beide Oberflächen der Fuge grundiert werden, dass die Dichtmasse zwischen die beiden Grundierschichten eingebracht wird, und im Falle, in dem nur eine Oberfläche der Fuge grundiert wird, dass die Dichtmasse zwischen die Grundierschicht der grundierten Fugenoberfläche und die nichtgrundierte Fugenoberfläche eingebracht wird.

Ein weiterer Gegenstand der vorliegenden Erfindung ist ein Schichtsystem umfassend 2 Substrate, mindestens eine aus einer Polyacrylat-Grundierung (AG) erhältliche Grundierschicht (G1) auf der Seite des ersten Substrats, die dem zweiten Substrat zugewandt ist und gegebenenfalls mindestens eine aus einer Polyacrylat-Grundierung (AG) erhältliche Grundierschicht (G2) auf der Seite des zweiten Substrats, die dem ersten Substrat zugewandt ist, und mindestens eine sich zwischen der Grundierschicht G1 und dem zweiten Substrat bzw. der Grundierschicht G2 befindende

härtbare Zusammensetzung auf Basis silanmodifizierter Polymere (KS), erhältlich nach dem oben beschriebenen Verfahren.

Ein weiterer Gegenstand der vorliegenden Erfindung ist ein Schichtsystem umfassend 2 Substrate, mindestens eine aus einer Polyacrylat-Grundierung (AG) erhältliche Grundierschicht (G1) auf der Seite des ersten Substrats, die dem zweiten Substrat zugewandt ist und gegebenenfalls mindestens eine aus einer Polyacrylat-Grundierung (AG) erhältliche Grundierschicht (G2) auf der Seite des zweiten Substrats, die dem ersten Substrat zugewandt ist, und mindestens eine sich zwischen der Grundierschicht G1 und dem zweiten Substrat bzw. der Grundierschicht G2 befindende härtbare Zusammensetzung auf Basis silanmodifizierter Polymere (KS), wobei die Polyacrylat-Grundierung (AG) und die härtbare Zusammensetzung auf Basis silanmodifizierter Polymere (KS) der vorangegangenen Beschreibung entspricht.

Kit-of-parts enthaltend mindestens eine der oben angegebenen Polyacrylat-Grundierungen (AG) bzw. mindestens eine aus einer Polyacrylat-Grundierung (AG) erhältliche Grundierschicht (G) und mindestens eine der oben angegebenen härtbaren Zusammensetzungen auf Basis silanmodifizierter Polymere (KS).

Das oben angegebene Kit-of-parts enthaltend mindestens eine der oben angegebenen Polyacrylat-Grundierungen (AG) bzw. mindestens eine aus einer Polyacrylat-Grundierung (AG) erhältliche Grundierschicht (G) und mindestens eine der oben angegebenen härtbaren Zusammensetzungen auf Basis silanmodifizierter Polymere (KS) für die Verwendung zum Aufbau eines Schichtsystems.

Das oben angegebene Kit-of-parts enthaltend mindestens eine der oben angegebenen Polyacrylat-Grundierungen (AG) bzw. mindestens eine aus einer Polyacrylat-Grundierung (AG) erhältliche Grundierschicht (G) und mindestens eine der oben angegebenen härtbaren Zusammensetzungen auf Basis silanmodifizierter Polymere (KS) für die Verwendung zum Aufbau eines Schichtsystems für die Verklebung eines Bodenbelags auf einem Untergrund.

Das oben angegebene Kit-of-parts enthaltend mindestens eine der oben angegebenen Polyacrylat-Grundierungen (AG) bzw. mindestens eine aus einer Polyacrylat-Grundierung (AG) erhältliche Grundierschicht (G) und mindestens eine der oben angegebenen härtbaren Zusammensetzungen auf Basis silanmodifizierter Polymere (KS) für die Verwendung zum Aufbau eines Schichtsystems für die Abdichtung von Fugen.

## Experimenteller Teil

### Messmethoden

***Chemikalien:***

Acrylsäure (ACS), CAS 79-10-7, Aldrich, DE

Methylmethacrylat (MMA), CAS 80-62-6, Aldrich, DE

Styrol (S), CAS 100-42-5, Aldrich, DE

n-Butylacrylat (BA), CAS 141-32-2, Aldrich, DE

Hydroxyethylmethacrylat (HEMA), CAS 868-77-9, Aldrich, DE

Ethylhexylmethacrylat (EHMA), CAS 868-77-9, Aldrich, DE

Adipinsäuredihydrazid (ADH); CAS 1071-93-8; Merck, DE

Diacetonacrylamid (DAAM); CAS 2873-97-4, Aldrich; DE

Acrylamid (AAM); CAS 79-06-1, Aldrich; DE

Ammoniumpersulfat (APS), CAS 7727-54-0, Aldrich, DE

Emulgator Tannemul 951 (STD), CAS 68610-22-0, Tanatex, DE

Dipropylenglykolmonomethylether (DPM), Dowanol DPM, CAS 34590-94-8, DOW, DE

Propylenglykol-n-butylether (PNB), Dowanol PnB, CAS 29387-86-8, DOW, DE

**Herstellung eines silanterminierten Prepolymers mit Urethan und Harnstoffgruppen P1**

In einem 2 L-Sulfierbecher mit Deckel, Rührer, Thermometer und Stickstoffdurchfluss wurden 880.1g eines difunktionellen Propylenglykols der OH-Zahl 13.4mg KOH/g (ermittelt nach DIN 53240-1(2012)) (Acclaim® Polyol 8200 N der Covestro Deutschland AG; Leverkusen DE) mit 46.7g Isophorondiisocyanat (IPDI, Desmodur® I, Covestro Deutschland AG, NCO-Gehalt 37.8%, Molare Masse 222 g/mol, CAS-Nr 4098-71-9) bei 60 °C unter Zugabe von 0.04 g Dibutylzinndilaurat für 5h umgesetzt. Nach Zugabe von 74g N-(3-Trimethoxysilylpropyl)-asparaginsäure-diethylester (hergestellt gemäß EP-A 596 360, Bsp. 5) wurde die Mischung gerührt, bis im IR Spektrum keine Isocyanatbande mehr zu sehen war.

**Herstellung einer härtbaren Zusammensetzung KS1 (z.B. Bodenbelagsklebstoff)**

Eine härtbare Zusammensetzung auf Basis der Polymerzusammensetzung P1 wurde gemäß der folgenden Vorschrift hergestellt: 551g von zuvor 16h bei 100°C im Umlufttrockenschrank getrocknetem Füllstoff Omyalite 95 T (Calciumcarbonat, Firma Omya) werden mit 218g Weichmacher (Alkansulfonsäurephenylester Mesamoll, Firma Lanxess, CAS-Reg.Nr. 091082-17-6 (ASE) Wassergehalt 0.03 Gew.-%), 178g Polymerzusammensetzung P1, 8.1g Cab-O-Sil TS 720 (Füllstoff hydrophobe pyrogene Kieselsäure, Firma Cabot, Wassergehalt ca. 0.11 Gew.-%), 23g Dynasilan VTMO (Trocknungsmittel auf Silanbasis, Firma Evonik, Vinyltrimethoxysilan, CAS-Nr 2768-02-7) und 1.2g 1,8-Diazabicyclo[5.4.0]undec-7-en (Sigma-Aldrich Co. LLC) im Labordissolver mit Butterflyrührer (200 Umdrehungen/min) und Dissolverscheibe (2500 Umdrehungen/min) für 15min unter statischem Vakuum und Kühlung dispergiert. Unter statischem Vakuum wird hierbei verstanden, dass die Apparatur bis auf einen Druck von 200 mbar evakuiert wird (dynamisches Vakuum) und danach die Verbindung zur Vakuumpupe getrennt wird. Die Kühlung wurde so gewählt, dass während der ganzen Herstellung eine Temperatur von 65°C nicht überschritten wird. Im Anschluss wurden 15.4g Dynasilan 1146 (Aminosilan-Haftvermittler, Firma Evonik) zugegeben und mit Dissolverscheibe (1000 Umdrehungen/min) unter statischem Vakuum und Kühlung für 10min vermischt. Zuletzt wurde die Mischung unter dynamischem Vakuum für 5min mit Dissolverscheibe (1000 Umdrehungen/min) weiter gemischt.

**Herstellung der Dispersionen:**

Im Folgenden Abschnitt wird eine allgemeine Synthesevorschrift zur Herstellung der erfindungsgemäßen Dispersionen beschrieben, die spezifischen Zusammensetzungen der einzelnen Versuche lassen sich aus Tab. 1 entnehmen.

**Allgemeine Synthesevorschrift:**

In einem 3 L Glasreaktor mit geregelter Heizung und Kühlung und Rührmotor werden unter Stickstoffatmosphäre die in Tabelle 1 unter W0 angegebenen Gewichtsteile Wasser und Emulgator vorgelegt. Die Lösung wird anschließend auf 80 °C aufgeheizt. Nach Erreichen der Polymerisationstemperatur werden die Monomermischung M1 und die Initiatorlösung W1 für die Herstellung der internen Saat innerhalb von 30 min. über eine Dosierpumpe zugegeben, danach wird noch 30 min. nachgerührt. Danach werden die Monomermischung M2 und die wässrige Lösung W2 innerhalb von 120 min. bei 80 °C zudosiert. Anschließend erfolgt die Zugabe der Monomermischung M3 sowie der wässrigen Lösung W3 in einem Zeitraum von 120 min. Direkt nach Beendigung der Dosierungen M3 und W3 wird die wässrige Lösung W4 innerhalb von 60 min. zudosiert. Die Dispersion wird noch über einen Zeitraum von 60 min weiter gerührt und anschließend abgekühlt. Zur pH-Einstellung auf pH 7 wird die entsprechende Menge ammoniakalischer Lösung langsam zugetropft und die fertige Dispersion wird über ein 125 µm Filter abgeführt. Anschließend erfolgt die Zugabe der wässrigen Lösung/Wasser W5.

| | | V1 | *V2* | *V3* | *V4* |
|---|---|---|---|---|---|
| **W0** | STD | 11,10 | 11,10 | 11,10 | 11,10 |
| | Wasser | 520,00 | *520,00* | *520,00* | *520,00* |

(fortgesetzt)

| | | V1 | *V2* | *V3* | *V4* |
|---|---|---|---|---|---|
| **M1** | Methylmethacrylat | 14,10 | *14,10* | *14,10* | *28,10* |
| | Ethylhexylacrylat | 2,50 | *2,50* | *2,50* | *2,50* |
| | Styrol | 14,00 | *14,00* | *14,00* | *0,00* |
| | Acrylsäure | 2,00 | *2,00* | *2,00* | *2,00* |
| | Hydroxyethylmethacrylat | 3,00 | *3,00* | *3,00* | *3,00* |
| | Diacetonacrylamid | | | | |
| | Acrylamid | | | | |
| **W1** | APS | 0,50 | *0,50* | *0,50* | *0,50* |
| | Wasser | 70,00 | *70,00* | *70,00* | *70,00* |
| **M2** | Methylmethacrylat | 85,90 | *85,90* | *85,90* | *218,50* |
| | Ethylhexylacrylat | 8,80 | *8,80* | *8,80* | *8,80* |
| | Styrol | 132,60 | *132,60* | *132,60* | *0,00* |
| | Acrylsäure | 12,10 | *12,10* | *12,10* | *12,10* |
| | Hydroxyethylmethacrylat | 32,00 | *32,00* | *32,00* | *32,00* |
| | Diacetonacrylamid | 6,20 | *6,20* | | |
| | Acrylamid | | | *6,20* | |
| **W2** | APS | 2,30 | *2,30* | *2,30* | *2,30* |
| | Wasser | 555,00 | *555,00* | *555,00* | *555,00* |
| | STD | 11,10 | 11,10 | 11,10 | 11,10 |
| **M3** | Methylmethacrylat | 171,60 | *171,60* | *171,60* | *353,40* |
| | Ethylhexylacrylat | 177,30 | *177,30* | *177,30* | *177,30* |
| | Styrol | 169,40 | *169,40* | *169,40* | *0,00* |
| | Acrylsäure | 14,10 | *14,10* | *14,10* | *14,10* |
| | Hydroxyethylmethacrylat | 72,00 | *72,00* | *72,00* | *72,00* |
| | Diacetonacrylamid | 12,40 | *12,40* | | |
| | Acrylamid | | | *12,40* | |
| **W3** | APS | 2,30 | *2,30* | *2,30* | *2,30* |
| | Wasser | 70,00 | *70,00* | *70,00* | *70,00* |
| **W4** | APS | 2,30 | *2,30* | *2,30* | *2,30* |
| | Wasser | 70,00 | *70,00* | *70,00* | *70,00* |
| **W5** | Adipinsäuredihydrazid | 9,57 | | | |
| | Wasser | 147,00 | *156,57* | *156,57* | *156,57* |

**Herstellung Lösemittelhaltiger Grundierungen AGI-AG4**

In einer 150 ml Glas-Flasche wurden zu 90g der Dispersionen (V1-V4) jeweils 5g PNB und DPM gegeben und die Komponenten in der Flasche durch kräftiges Schütteln vermischt.

**Herstellung der Lösemittelfreien Grundierung AG5**

In einer 150 ml Glas-Flasche wurden zu 60g der Dispersion V1 40 g einer Polyurethandispersion hergestellt analog EP2440592, Beispiel 3 (abweichend Festkörper 35%) gegeben und die Komponenten in der Flasche durch kräftiges Schütteln vermischt.

Die so erhaltenen Grundierungen AG1-AG5 wurden weiter untersucht.

**Bestimmung der Zugscherfestigkeit**

Zur Bestimmung der Zugscherfestigkeit wurden einfach überlappte Prüfkörper aus zwei Buchenholzstücken

mit einer Überlappungslänge von 10 mm und einer Klebspaltdicke von etwa 1 mm verwendet. Die dazu verwendeten Buchenholzstücke wiesen jeweils folgende Maße auf: Länge=40mm, Breite=20mm, Dicke=5mm und wurden vor Verwendung mindestens 1 Woche bei Tage bei 23 °C/50 % rel. Luftfeuchte gelagert.

Wenn nicht anders beschrieben wurde zur Herstellung der Prüfkörper eines der beiden überlappenden Buchenholzstücke jeweils ohne weitere Vorbehandlung eingesetzt, das zweite Buchenholzstück wurde wie unten unter "Herstellung der vorbehandelten Buchenholzstücke für die Herstellung der Prüfkörper für die Zugscherfestigkeitsprüfung" beschrieben vorbehandelt bzw. grundiert. Auf das vorbehandelte Buchenholzstück wurde jeweils nach der angegebenen Wartezeit der Klebstoff aufgetragen und das zweite Buchenholzstück (unbehandelt) aufgelegt. Seitlich heraustretender Klebstoff wurde gegebenenfalls sofort mit einem Spachtel entfernt. Die Prüfkörper wurden unter Zuhilfenahme von Metallplättchen zur Einstellung der Klebspaltdicke in einer geeigneten Vorrichtung gelagert. Bei den Versuchen ohne Grundierung/Vorbehandlung wurden jeweils zwei nicht vorbehandelte Buchenholzstücke verwendet.

Die Prüfkörper wurden für 3 Tage bei 23 °C/50 % rel. Luftfeuchte gelagert. (LAGERUNGSFOLGE 1)

Die Messung der Zugscherfestigkeit erfolgte jeweils an eine Zugprüfmaschine bei einer Vorschubgeschwindigkeit von 100 mm/min. Dabei wurden die Prüfkörper bis zum Bruch gedehnt und die benötigten Kräfte gemessen. Die angegebenen Ergebnisse entsprechen dem arithmetischen Mittelwert aus 5 Versuchen.

<u>Herstellung der vorbehandelten Buchenholzstücke für die Herstellung der Prüfkörper für die Zugscherfestigkeitsprüfung</u>

Das als Primer verwendete Gemisch wird mittels eines Pinsels (Auftragsgewicht 170 g/$m^2$) einschichtig auf die Buchenholzprüfkörper aufgetragen. Die so erhaltenen vorbehandelten bzw. grundierten Buchenholzstücke wurden vor dem Auftragen der härtbaren Zusammensetzungen für 4h) bei 23 Grad Celsius und 50% relativer Luftfeuchte, falls nicht abweichend angegeben, gelagert, bevor die härtbaren Zusammensetzungen aufgetragen wurden.

Mit diesem Aufbau (Buchenholz/härtbare Zusammensetzung/Grundierung/Buchenholz) konnte die Festigkeit des Verbundes aus Grundierung und ausgehärtetem Klebstoff auf Zugscherbelastung untersucht werden. Insbesondere im Vergleich mit einem Aufbau ohne die Grundierung (Buchenholz/härtbare Zusammensetzung/Buchenholz) zeigt sich dabei, ob sich die Grundierung deutlich negativ auf die Verbundfestigkeit auswirkt, was in der Praxis nicht erwünscht ist.

Beispiele 1-5

Unter Verwendung der Grundierungen AG1-AG5 und der härtbaren Zusammensetzung KS1 wurden die Zugscherfestigkeiten ermittelt. Alle Grundierungen basierend auf Dispersionen aus den Versuchen V2-V4, die entweder keine Verbindung AH oder kein Monomer c) enthalten, führen bei einer Wartezeit von nur 4h vor Klebstoffapplikation zu ungenügenden Haftergebnissen und in Folge zu schlechten Verbundfestigkeiten. Lediglich bei Kombination von Monomer c) und Verbindung AH) wurde ein kohäsives Versagen des Klebstoffes und eine ausreichende Verbundfestigkeit erreicht. Zudem wird keine Aufweichung der Grundierung AG1 durch Weichmachermigration aus dem Klebstoff in die Randbereiche beobachtet.

| | **BSP 1** | ***BSP 2*** | ***BSP 3*** | ***BSP 4*** | **BSP 5** |
|---|---|---|---|---|---|
| **Grundierung** | AG1 | *AG2* | *AG3* | *AG4* | AG5 |
| **Versagen im Zugscherversuch** | K | A | A | A | K |
| **Zugscherfestigkeit [N/mm2]** | 2,4 | 1,2 | 0,9 | 1,4 | 2,4 |

A: Adhäsives Versagen (keine Haftung zwischen Primer und Klebstoff)
K: Kohäsives Versagen (Haftung zwischen Primer und Klebstoff)

Beispiele 2-5: Vergleichsbeispiele

**Beispiel la (erfindungsgemäß)**

Zur 100 g der Grundierung AG1 wurden 5 g einer wässrigen Dispersion eines hydrophil modifizierten, polyfunktionellen Carbodiimids (Wasseranteil 60%, -N=C=N-Gehalt 1%, Desmodur® XP 2802, Covestro Deutschland AG) zugegeben. Die erhaltene Mischung wurde als Grundierung analog zu den Beispielen 1-5 eingesetzt, wobei die Wartezeit einmal 4h und einmal 24h betrug. Es wurde in beiden Fällen im Zugscherversuch eine Zugscherfestigkeit von 2,5 N/mm2 mit kohäsivem Versagen des Klebstoffes ermittelt,

**Beispiel 6 (Vergleich)**

Zum Vergleich wurden die Versuche ohne Auftragung von Grundierung auf das Holz wiederholt. Beide Buchenholzprüfkörper waren also nicht vorbehandelt. Es wurde ein überwiegend kohäsives Versagen bei einer Zugscherfestigkeit von 3,0 N/mm2 beobachtet.

**Beispiel 7 (Vergleich)**

Analog zu Beispiel 6 wurde mit vergleichbar hergestellten und gelagerten Prüfkörpern ohne Grundierung bei Klebung mit einer nicht erfindungsgemäßen Zusammensetzung auf Basis einer härtenden Polyvinylacetatdispersion mit Metallsalzvernetzer Aluminiumchlorid eine Zugscherfestigkeit von 11.75 $N/mm^2$ erreicht (Fügeteilversagen). Bei einem analogen Versuch mit der erfindungsgemäßen Grundierung AG1 und 4h Wartezeit vor wurden hingegen nur eine Zugscherfestigkeit von 7 $N/mm^2$ erreicht, wobei ein adhäsives Versagen beobachtet wurde.

In Kombination mit diesem nicht-erfindungsgemäßen Klebstoff reduzierte die erfindungsgemäße Grundierung die Zugscherfestigkeit des Systems dramatisch. Dies wurde im Falle der Schichtaufbau aus erfindungsgemäßer Grundierung und erfindungsgemäßer härtender Zusammensetzung nicht beobachtet.

Beispiel 7 zeigt, dass die Auswahl der härtbaren Zusammensetzung (KS) in Schichtaufbau mit der erfindungsgemäßen Grundierung AG nicht trivial ist, da es bei Verwendung der Grundierung AG mit einem nicht erfindungsgemäßen Klebstoff zu einer deutlich verringerten Gesamtfestigkeit im System gegenüber dem nicht grundierten Systemen kommt und die Leistungsfähigkeit des Klebstoffes dann nicht voll ausgenutzt werden kann.

**Beispiel 8 (Vergleich)**

Analog zu Beispiel 6 wurde mit vergleichbar hergestellten und gelagerten Prüfkörpern ohne Grundierung bei Klebung mit einer nicht erfindungsgemäßen Zusammensetzung auf Basis einer härtenden 2K Epoxyharzklebstoffes (Araldite 2011 | 50 ml Doppelkartusche mit ZMS) eine Zugscherfestigkeit von 13 $N/mm^2$ erreicht (Fügeteilversagen). Bei einem analogen Versuch mit der erfindungsgemäßen Grundierung AG1 und 4h Wartezeit wurden hingegen nur eine Zugscherfestigkeit von 7 $N/mm^2$ erreicht, wobei ein adhäsives Versagen beobachtet wurde.

Hier reduzierte die erfindungsgemäße Grundierung die Zugscherfestigkeit des Systems dramatisch. Dies wurde im Falle der Schichtaufbau aus erfindungsgemäßer Grundierung und erfindungsgemäßer härtender Zusammensetzung nicht beobachtet.

Beispiel 8 zeigt, dass die Auswahl der härtbaren Zusammensetzung (KS) in Schichtaufbau mit der erfindungsgemäßen Grundierung AG nicht trivial ist, da es bei Verwendung der Grundierung AG mit einem nicht erfindungsgemäßen Klebstoff zu einer deutlich verringerten Gesamtfestigkeit im System gegenüber dem nicht grundierten Systemen kommt und die Leistungsfähigkeit des Klebstoffes dann nicht voll ausgenutzt werden kann.

**Beispiel 9: Prüfung der Haftzugfähigkeit der Grundierung AG1, AGS und SIKA PRIMER MR FAST**

Herstellung und Lagerung der Prüfkörper:

Es wurde die Haftzugfähigkeit der Grundierung AG1 auf einer vorher durchfeuchteten Betonplatte mit der der Grundierung auf Basis SIKA PRIMER MR FAST (wässrige, zweikomponentige Epoxydharz-Grundierung, Firma Sika) verglichen.

Als Prüfkörper wurde die Oberseite von Stelcon Ferubin- Hartbetonplatten 30x30 x3cm
BTE Stelcon Deutschland GmbH, Philippsburger Str. 4, 76726 Germersheim verwendet.

Diese wurden 28d unter Standardbedingungen bei 23 Grad Celsius und 50% relativer Luftfeuchte gelagert, anschließend wurde die Oberseite mit 5% Zitronensäurelösung in Wasser eingestrichen und nach 20 min Einwirkzeit mit einer Bürste unter fließendem Wasser von eventuell anhaftenden Zementschlämmen befreit. Anschließend wurde die Platte für 7d in Wasser gelagert, aus dem Wasser genommen und aufrecht stehend gelagert, sodass oberflächlich anhaftendes Wasser abfließen konnte.

Auf die so vorbereitete Oberfläche wurde nun AG1 unmittelbar nach Herstellung im Speedmixer mittels Rolle (Moltopren-Rolle) mit ca. 200 $g/m^2$ Auftragsgewicht auf die Platten appliziert. Danach wurden die grundierten Platten mit der Rückseite auf Kunststoffbahnen für 16h bei 23 Grad Celsius und 50% relativer Luftfeuchte gelagert.

Zum Schaffen einer ebenen Schichtdicke wurden die grundierten Platten mit einer selbstverlaufenden 2 komponentigen Polyurethan-Beschichtung (Kennzahl NCO/OH = 1,05/1) auf Basis Setathane D 1150 (Rizinusölbasiertes verzweigtes Polyol, Fa. Nuplex, Hydroxylgehalt gemäß DIN 53 240/2 ca. 4.7 Gew,-%) / Desmodur VL (Aromatisches Polyisocyanat auf Basis Diphenylmethandiisocyanat, Gehalt an Isocyanatgruppen gemäß ISO 11909:2007 31.5%) mit ca. 1.5 mm Schichtdicke überschichtet. Danach wurden die Platten erneut für 24 h mit der Rückseite auf Kunststoffbahnen gelagert.

An einer Serie von Platten (Serie A) wird unmittelbar danach die Haftzugfähigkeitsprüfung durchgeführt. Eine weitere Serie (Serie B) wird so mit der Rückseite in ein Wasserbasin gestellt, dass die Wasseroberfläche ca. 1 cm unter

der Grundierung verläuft und für 28d bei 23 Grad Celsius und 50% relativer Luftfeuchte in dieser Weise gelagert.

Analog wurden Platten grundiert und gelagert, nur dass an Stelle der Grundierung AG1 nun SIKA® PRIMER MR FAST (wässrige, 2-komponentige Epoxydharz-Grundierung, Forma Sika) hergestellt gemäß Anleitung des Herstellers (Mischungsverhätnis Komponente A:B 2.8/1.4 Gewichtsteile) verwendet wurde.

Ermittlung der Stirnabzugsfähigkeit:

Die Ermittlung der Stirnabzugsfähigkeit erfolgte mit dem Haftprüfsystem HP 850.

In die Oberseite der wie oben hergestellten und gelagerten Platten werden 3 Bohrkerne mit einem Durchmesser von ca. 5 cm und ca. 5 mm tief in den Beton gefräst. Der Abstand zwischen den Rändern der Bohrkernen war dabei größer als 4 cm. Die Klebefläche wurde mit Schleifpapier angeschliffen, entstaubt und mit Aceton entfettet. Die vorher gereinigten Prüfstempel (rund, 50 mm Durchmesser) wurden mit dem 2K-Epoxidharz-Kleber Metallon FL (Sichelwerke GmbH) in gleichmäßig dünner Schicht unter seitlichem Drehen aufgeklebt, wobei darauf geachtet wurde, dass der dabei eventuell herausquellende Kleber darf nicht in die Fräsnut lief und ggf. entfernt wurde.

Nach 24h Lagerung bei 23 Grad Celsius und 50% relativer Luftfeuchte wurde die Stirnabzugsfähigkeit ermittelt und wie folgt berechnet:

Dimension der Abreißkraft = $N/mm^2$
Fläche des 50 mm-Stempel = 1964 $mm^2$
Ablesewert = KN
1KN = 1000N
Haftzugfestigkeit = Abreißkraft [N] : Fläche [$mm^2$]

**Tabelle 8:** Haftzugfestigkeiten der Grundierung vor und nach Lagerung

| | SIKA® PRIMER MR FAST | Grundierung AG 1 |
|---|---|---|
| Serie A | 3.6 (Bruch im Beton) | 2.8 (Bruch im Beton) |
| Serie B | 3.1 (Bruch zwischen Beton und Grundierung) | 2.6 (Bruch zwischen Beton und Grundierung) |

Wie die Tabelle 8 zeigt ist die Haftzugfestigkeit der Grundierung AG1 absolut vergleichbar mit dem System des Standes der Technik und liegt jeweils deutlich oberhalb dem für elastische Parkettklebstoffe gemäß DIN EN 14293 geforderten Wert von 1 $N/mm^2$.

**Patentansprüche**

**1.** Schichtaufbau enthaltend
mindestens eine aus einer Polyacrylat-Grundierung (AG) erhältliche Grundierschicht (G), **dadurch gekennzeichnet, dass** die Polyacrylat-Grundierung (AG) in Form einer wässrigen Polymerdispersion vorliegt, wobei diese wässrige Polymerdispersion in Wasser dispergierte Polymerpartikel enthält und herstellbar ist durch radikalische Polymerisation von Monomeren enthaltend

a) mindestens 50 Gew.-Prozent, bezogen auf die Gesamtmenge an Monomeren a) bis d), mindestens eines Monomeren ausgewählt aus der Gruppe bestehend aus $C_1$- bis $C_{20}$-Alkylacrylaten, $C_1$- bis $C_{20}$-Alkylmethacrylaten, Vinylestern von bis zu 20 Kohlenstoffatomen enthaltenden Carbonsäuren, Vinylaromaten mit bis zu 20 Kohlenstoffatomen, Vinylhalogeniden, Vinylethern von 1 bis 10 Kohlenstoffatome enthaltenden Alkoholen, aliphatischen Kohlenwasserstoffen mit 2 bis 8 Kohlenstoffatomen und ein oder zwei Doppelbindungen und Mischungen dieser Monomere und
b) mindestens 0.1 Gew.-Prozent, bezogen auf die Gesamtmenge an Monomeren a) bis d), mindestens eines Monomeren mit mindestens einer Säuregruppe und Mischungen dieser Monomere, und
c) mindestens 0.1 bis 5 Gew.-Prozent, bezogen auf die Gesamtmenge an Monomeren a) bis d), mindestens einer ethylenisch ungesättigten Verbindung mit mindestens einer funktionellen Gruppe, ausgewählt aus Ketogruppen und Aldehydgruppen,

wobei die wässerige Polymerdispersion zusätzlich zu den in Wasser dispergierten Polymerpartikeln mindestens eine Verbindung AH enthält, welche mindestens zwei funktionelle Gruppen aufweist, die mit den

Ketogruppen oder mit den Aldehydgruppen eine Vernetzungsreaktion eingehen können, wobei das Molverhältnis der mit Ketogruppen oder mit Aldehydgruppen reaktiven Gruppen der Verbindung AH zu den Keto- und Aldehydgruppen des Monomers b) 1:10 bis 2:1 beträgt;

d) optional weitere Monomere

und mindestens eine auf der Grundierschicht (G) applizierte härtbare Zusammensetzung auf Basis silanmodifizierter Polymere (KS), **dadurch gekennzeichnet, dass** die silanmodifizierten Polymere mindestens eine Endgruppe der allgemeinen Formel (I)

$$-A_n\text{-}R\text{-}SiVYZ \qquad (I),$$

aufweisen, in welcher

A für eine zweibindige, mindestens ein Heteroatom enthaltende Bindegruppe steht,
R für einen zweibindigen Kohlenwasserstoffrest mit 1-12 Kohlenstoff-Atomen steht,
V, Y, Z für Substituenten am Si-Atom stehen, die unabhängig voneinander für $C_1$-$C_8$-Alkyl-, $C_1$-$C_8$-Alkoxy- oder $C_1$-$C_8$-Acyloxygruppen stehen, wobei mindestens einer der Reste V, Y, Z für eine $C_1$-$C_8$-Alkoxy- oder $C_1$-$C_8$-Acyloxygruppe steht, und
n für 0 oder 1 steht.

**2.** Schichtaufbau gemäß Anspruch 1 enthaltend mindestens eine aus einer Polyacrylat-Grundierung (AG) erhältliche Grundierschicht (G), **dadurch gekennzeichnet, dass** die Polyacrylat-Grundierung (AG) in Form einer wässrigen Polymerdispersion vorliegt, wobei diese wässrige Polymerdispersion in Wasser dispergierte Polymerpartikel enthält, und herstellbar ist durch radikalische Polymerisation von Monomeren enthaltend

a) 50 bis 90 Gew.-Prozent, bezogen auf die Gesamtmenge an Monomeren a) bis d), mindestens eines Monomeren ausgewählt aus der Gruppe Methylmethacrylat, Methylacrylat, Butylacrylat, n-Butylacrylat, Ethylacrylat, 2-Ethylhexylacrylat, 2-Propylheptylacrylat, n-Hexylacrylat, n- Octylacrylat, Hexylacrylat, Octylacrylat, Benzenyl(meth)acrylat, Isobutylacrylat, tert.-Butyl(meth)acrylat, Cyclohexyl(meth)acrylat, Vinyllaurat, Vinylstearat, Vinylpropionat, Versaticsäurevinylester, Vinylacetat, Vinyltoluol, alpha- und para-Methylstyrol, Styrol, alpha-Butylstyrol, 4-n-Butylstyrol, 4-n-Decylstyrol, Vinylchlorid, Vinylidenchlorid, Vinylmethylether und Vinylisobutylether und Mischungen dieser Monomere und
b) 0.5 bis 5 Gew.-Prozent, bezogen auf die Gesamtmenge an Monomeren a) bis d), mindestens eines Monomeren mit mindestens einer Säuregruppe ausgewählt aus der Gruppe alpha, beta-monoethylenisch ungesättigte Mono- und Dicarbonsäuren, Halbester von alpha, beta-monoethylenisch ungesättigten Dicarbonsäuren, die Anhydride der vorgenannten alpha, beta-monoethylenisch ungesättigten Carbonsäuren sowie ethylenisch ungesättigte Sulfonsäuren, Phosphonsäuren oder Dihydrogenphosphate und deren wasserlösliche Salze und Mischungen dieser Monomere und
c) 0.2 bis 5 Gew.-Prozent, bezogen auf die Gesamtmenge an Monomeren a) bis d), mindestens einer ethylenisch ungesättigten Verbindung mit mindestens einer funktionellen Gruppe, ausgewählt aus Ketogruppen und Aldehydgruppen ausgewählt aus der Gruppe Acrolein, Methacrolein, Vinylalkylketone mit 1 bis 20, Formylstyrol, (Meth)acrylsäurealkylester mit ein oder zwei Keto- oder Aldehydgruppen, bzw. einer Aldehyd- und einer Ketogruppe im Alkylrest wobei der Alkylrest vorzugsweise insgesamt 3 bis 10 Kohlenstoffatome umfasst, N-Oxoalkyl(meth)acrylamide der Formel $R_6$-C(=O)-$R_7$-NH-C(=O)-$CR_8$=$CH_2$, wobei $R_6$ und $R_8$ unabhängig voneinander Wasserstoff oder eine Kohlenwasserstoffgruppe mit 1 bis 10 Kohlenstoffatomen bedeuten und $R_7$ eine Kohlenwasserstoffgruppe mit 2 bis 15 Kohlenstoffatomen bedeutet,

wobei die wässerige Polymerdispersion zusätzlich zu den in Wasser dispergierten Polymerpartikeln mindestens eine Verbindung AH enthält, welche mindestens zwei funktionelle Gruppen aufweist, die mit den Ketogruppen oder mit den Aldehydgruppen eine Vernetzungsreaktion eingehen können, ausgewählt aus der Gruppe Oxalsäuredihydrazid, Malonsäuredihydrazid, Bernsteinsäuredihydrazid, Carbodihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid, Isophthalsäuredihydrazid., Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid- und Propylenoxid-Addukte von Aminen,

Cyclohexandiamin und Xylylendiamin,
wobei das Molverhältnis der mit Ketogruppen oder mit Aldehydgruppen reaktiven Gruppen der Verbindung AH zu den Keto- und Aldehydgruppen des Monomers b) 1:10 bis 2:1 beträgt,

d) optional weitere Monomere d) mit einem Anteil Anteil von 5 bis 15 Gew.-Prozent bezogen auf die Gesamtmenge an Monomeren a) bis d), ausgewählt aus der Gruppe Acrylamid, Methacrylamid, N-Methylolacrylamid, N-Methylolmethacrylamid, oder Phenyloxyethylglykolmono(meth)acrylat, Hydroxyethylacrylat, Hydroxyethylmethacrylat, Hydroxypropylacrylat, Hydroxypropylmethacrylat, 4-Hydroxybutylacrylat, 2-Aminoethyl(meth)acrylat, tert.-Butylaminoethylmethacrylat, Acrylnitril, Methacrylnitril, Vinyl-, Allyl- und Methallylglycidylether und Glycidyl(meth)acrylat, Butandioldi(meth)acrylat, Allylmethacrylat und Hydroxyalkyl-(meth)acrylate mit 1 bis 10 Kohlenstoffatomen in der Alkylgruppe,

und
mindestens eine auf der Grundierschicht (G) applizierte härtbare Zusammensetzung auf Basis silanmodifizierter Polymere (KS), **dadurch gekennzeichnet, dass** die silanmodifizierten Polymere mindestens eine Endgruppe der allgemeinen Formel (I) aufweisen, in welcher

A für ein Sauerstoffatom oder eine Gruppe -NR'-, worin R' ein H-Atom oder ein Alkyl- oder Arylrest mit 1 bis 12 C- Atomen ist, Amid-, Carbamat-, Harnstoff-, Imino-, Carboxylat-, Carbamoyl-, Amidino-, Carbonat-, Sulfonat- oder Sulfinatgruppe steht,
R für einen zweibindigen Kohlenwasserstoffrest mit 1-6 Kohlenstoffatomen steht,
V, Y, Z für Substituenten am Si-Atom und jeweils unabhängig voneinander für eine Methyl-, Ethyl-, Methoxy- oder Ethoxygruppe stehen, wobei mindestens einer der Reste V, Y oder Z für eine Methoxy- oder Ethoxygruppe steht,
n für 0 oder 1 steht.

**3.** Schichtaufbau gemäß Ansprüchen 1 oder 2 enthaltend mindestens eine aus einer Polyacrylat-Grundierung (AG) erhältliche Grundierschicht (G), **dadurch gekennzeichnet, dass** die Polyacrylat-Grundierung (AG) einen Anteil von Lösemitteln im Sinne der TRGS 610, Ausgabe: Januar 2011, Abschnitt 2.5 von weniger als 1% aufweist.

**4.** Schichtaufbau gemäß Ansprüchen 1 bis 3 enthaltend mindestens eine aus einer Polyacrylat-Grundierung (AG) erhältliche Grundierschicht (G), **dadurch gekennzeichnet, dass** die Polyacrylat-Grundierung (AG) eine Polyetherurethandispersion mit einer Mindestfilmbildungstemperatur (gemessen an einer Filmbildebank mit Temperaturgefälle, DIN ISO 2115:2001-04) von kleiner als 5°C enthält.

**5.** Schichtaufbau gemäß Ansprüchen 1 bis 4 enthaltend mindestens eine aus einer Polyacrylat-Grundierung (AG) erhältliche Grundierschicht (G), **dadurch gekennzeichnet, dass** die Polyacrylat-Grundierung (AG) weitere Verbindungen X3Y3 enthält, die mit vorhandenen reaktiven Gruppen in der wässrigen Polymerdispersion reagieren können, ausgewählt aus der Gruppe von Verbindungen, die Carbodiimidgruppen enthalten (Carbodiimidvernetzer), welche mit in der Polymerdispersion vorliegenden Carbonsäuregruppen reagieren können.

**6.** Schichtaufbau gemäß Ansprüchen 1 bis 5, **dadurch gekennzeichnet, dass** die Grundierschicht (G) durch eine 1- bis 72-stündige Lagerung einer unter Verwendung der Polyacrylat-Grundierung (AG) erzeugten wässrigen Schicht erhalten wird.

**7.** Schichtsystem umfassend mindestens eine der in Ansprüchen 1 bis 6 angegebenen Schichtaufbauten umfassend mindestens eine aus einer Polyacrylat-Grundierung (AG) erhältliche Grundierschicht (G) und mindestens eine darauf applizierte härtbare Zusammensetzung auf Basis silanmodifizierter Polymere (KS).

**8.** Schichtsystem umfassend mindestens eine der in Ansprüchen 1 bis 6 angegebenen Schichtaufbauten umfassend mindestens eine aus einer Polyacrylat-Grundierung (AG) erhältliche Grundierschicht (G) und mindestens eine darauf applizierte härtbare Zusammensetzung auf Basis silanmodifizierter Polymere (KS) und darauf verklebtes Substrat, beispielsweise Bodenbelag.

**9.** Verfahren zum Kleben von Bodenbelägen auf vorbehandelten Untergründen unter Verwendung mindestens einer der in Ansprüchen 1 bis 6 angegebenen Schichtaufbauten umfassend mindestens eine aus einer Polyacrylat-Grundierung (AG) erhältliche Grundierschicht (G) als Vorbehandlung und mindestens eine härtbare Zusammensetzung auf Basis silanmodifizierter Polymere (KS) als Klebstoff.

10. Verfahren gemäß Anspruch 10, **dadurch gekennzeichnet, dass** die Polyacrylat-Grundierung (AG) einschichtig aufgetragen wird.

11. Verfahren gemäß Ansprüchen 9 und 10, **dadurch gekennzeichnet, dass** auf den Untergrund zuerst eine Polyacrylat-Grundierung (AG) aufgebracht wird und nachfolgend der Bodenbelag mit mindestens einer härtbaren Zusammensetzung auf Basis silanmodifizierter Polymere (KS) auf den so vorbehandelten Untergrund geklebt wird, **dadurch gekennzeichnet, dass** die härtbare Zusammensetzung auf Basis silanmodifizierter Polymere (KS) zwischen 1-72 h, bevorzugt 1-48h, besonders bevorzugt 2-24h nach dem Aufbringen der Polyacrylat-Grundierung aufgebracht wird.

12. Schichtsystem umfassend einen Untergrund, mindestens eine aus einer Polyacrylat-Grundierung (AG) erhältliche Grundierschicht (G), mindestens eine darauf applizierte härtbare Zusammensetzung auf Basis silanmodifizierter Polymere (KS) und darauf verklebter Bodenbelag, wobei die Polyacrylat-Grundierung (AG) einer der in den Ansprüchen 1-5 beschriebenen Polyacrylat-Grundierungen (AG) und die härtbare Zusammensetzung auf Basis silanmodifizierter Polymere (KS) einer der in den Ansprüchen 1-5 beschriebenen Zusammensetzungen auf Basis silanmodifizierter Polymere (KS) entspricht.

13. Verfahren zum Abdichten von Fugen zwischen 2 Substraten unter Verwendung mindestens einer der in Ansprüchen 1 bis 6 angegebenen Schichtaufbauten, umfassend mindestens eine aus einer Polyacrylat-Grundierung (AG) erhältliche Grundierschicht (G) als Vorbehandlung und mindestens eine härtbare Zusammensetzung auf Basis silanmodifizierter Polymere (KS) als Dichtmasse.

14. Verfahren gemäß Anspruch 13, **dadurch gekennzeichnet, dass** zuerst eine Polyacrylat-Grundierung (AG) auf wenigstens eine der beiden Oberflächen einer durch 2 Substrate gebildeten Fuge aufgebracht wird und nachfolgend mindestens eine härtbare Zusammensetzung auf Basis silanmodifizierter Polymere (KS) als Dichtmasse in die Fuge eingebracht wird, **dadurch gekennzeichnet, dass** die härtbare Zusammensetzung auf Basis silanmodifizierter Polymere (KS) zwischen 1-72 h, bevorzugt 1-48h, besonders bevorzugt 2-24h nach dem Aufbringen der Polyacrylat-Grundierung auf die Oberfläche bzw. -flächen der Fuge eingebracht wird.

15. Schichtsystem umfassend 2 Substrate, mindestens eine aus einer Polyacrylat-Grundierung (AG) erhältliche Grundierschicht (G1) auf der Seite des ersten Substrats, die dem zweiten Substrat zugewandt ist und gegebenenfalls mindestens eine aus einer Polyacrylat-Grundierung (AG) erhältliche Grundierschicht (G2) auf der Seite des zweiten Substrats, die dem ersten Substrat zugewandt ist, und mindestens eine sich zwischen der Grundierschicht G1 und dem zweiten Substrat bzw. der Grundierschicht G2 befindende härtbare Zusammensetzung auf Basis silanmodifizierter Polymere (KS), wobei die Polyacrylat-Grundierung (AG) einer der in den Ansprüchen 1-5 beschriebenen Polyacrylat-Grundierungen (AG) und die härtbare Zusammensetzung auf Basis silanmodifizierter Polymere (KS) einer der in den Ansprüchen 1-5 beschriebenen Zusammensetzungen auf Basis silanmodifizierter Polymere (KS) entspricht.

16. Kit-of-parts enthaltend mindestens eine der in Ansprüchen 1-6 angegebenen Polyacrylat-Grundierungen (AG) bzw. Grundierschichten (G) und mindestens eine der in Ansprüchen 1-6 angegebenen härtbaren Zusammensetzungen auf Basis silanmodifizierter Polymere (KS).

## Claims

1. Layer structure comprising
at least one primer layer (G) obtainable from a polyacrylate primer (AG), **characterized in that** the polyacrylate primer (AG) is in the form of an aqueous polymer dispersion, where this aqueous polymer dispersion contains water-dispersed polymer particles and is producible by free-radical polymerization of monomers comprising

    a) at least 50 percent by weight, based on the total amount of monomers a) to d), of at least one monomer selected from the group consisting of $C_1$- to $C_{20}$-alkyl acrylates, $C_1$- to $C_{20}$-alkyl methacrylates, vinyl esters of carboxylic acids containing up to 20 carbon atoms, vinylaromatics having up to 20 carbon atoms, vinyl halides, vinyl ethers of alcohols containing 1 to 10 carbon atoms, aliphatic hydrocarbons having 2 to 8 carbon atoms and one or two double bonds, and mixtures of these monomers, and
    b) at least 0.1 percent by weight, based on the total amount of monomers a) to d), of at least one monomer having at least one acid group and mixtures of these monomers, and
    c) at least 0.1 to 5 percent by weight, based on the total amount of monomers a) to d), of at least one ethylenically

unsaturated compound having at least one functional group selected from keto groups and aldehyde groups,

where the aqueous polymer dispersion, in addition to the water-dispersed polymer particles, contains at least one compound AH having at least two functional groups that can enter into a crosslinking reaction with the keto groups or with the aldehyde groups,
where the molar ratio of the groups in compound AH that are reactive with keto groups or with aldehyde groups to the keto and aldehyde groups in monomer b) is 1:10 to 2:1;

d) optionally further monomers

and
at least one curable composition based on silane-modified polymers (KS) that has been applied to the primer layer (G), **characterized in that** the silane-modified polymers have at least one end group of the general formula (I)

$$-A_n-R-SiVYZ \qquad (I)$$

in which

A is a divalent binding group containing at least one heteroatom,
R is a divalent hydrocarbyl radical having 1-12 carbon atoms,
V, Y, Z are substituents on the silicon atom that are independently $C_1$-$C_8$-alkyl, $C_1$-$C_8$-alkoxy or $C_1$-$C_8$-acyloxy groups, where at least one of the V, Y, Z radicals is a $C_1$-$C_8$-alkoxy or $C_1$-$C_8$-acyloxy group, and
n is 0 or 1.

**2.** Layer structure according to Claim 1, comprising at least one primer layer (G) obtainable from a polyacrylate primer (AG), **characterized in that** the polyacrylate primer (AG) is in the form of an aqueous polymer dispersion, where this aqueous polymer dispersion contains water-dispersed polymer particles and is producible by free-radical polymerization of monomers comprising

a) 50 to 90 percent by weight, based on the total amount of monomers a) to d), of at least one monomer selected from the group of methyl methacrylate, methyl acrylate, butyl acrylate, n-butyl acrylate, ethyl acrylate, 2-ethylhexyl acrylate, 2-propylheptyl acrylate, n-hexyl acrylate, n-octyl acrylate, hexyl acrylate, octyl acrylate, benzenyl (meth)acrylate, isobutyl acrylate, tert-butyl (meth)acrylate, cyclohexyl (meth)acrylate, vinyl laurate, vinyl stearate, vinyl propionate, vinyl versatate, vinyl acetate, vinyltoluene, alpha- and para-methylstyrene, styrene, alpha-butylstyrene, 4-n-butylstyrene, 4-n-decylstyrene, vinyl chloride, vinylidene chloride, vinyl methyl ether and vinyl isobutyl ether and mixtures of these monomers, and
b) 0.5 to 5 percent by weight, based on the total amount of monomers a) to d), of at least one monomer having at least one acid group selected from the group of alpha,beta-monoethylenically unsaturated mono- and dicarboxylic acids, monoesters of alpha,beta-monoethylenically unsaturated dicarboxylic acids, the anhydrides of the aforementioned alpha,beta-monoethylenically unsaturated carboxylic acids and ethylenically unsaturated sulfonic acids, phosphonic acids or dihydrogenphosphates and water-soluble salts thereof and mixtures of these monomers, and
c) 0.2 to 5 percent by weight, based on the total amount of monomers a) to d), of at least one ethylenically unsaturated compound having at least one functional group selected from keto groups and aldehyde groups, selected from the group of acrolein, methacrolein, vinyl alkyl ketones having 1 to 20, formylstyrene, alkyl (meth)acrylates having one or two keto or aldehyde groups, or one aldehyde and one keto group, in the alkyl radical, where the alkyl radical preferably comprises 3 to 10 carbon atoms in total, N-oxoalkyl(meth)acrylamides of the formula $R_6$-C(=O)-$R_7$-NH-C(=O)-$CR_8$=$CH_2$ where $R_6$ and $R_8$ are independently hydrogen or a hydrocarbyl group having 1 to 10 carbon atoms, and $R_7$ is a hydrocarbyl group having 2 to 15 carbon atoms,

where the aqueous polymer dispersion, in addition to the water-dispersed polymer particles, contains at least one compound AH having at least two functional groups that can enter into a crosslinking reaction with the keto groups or with the aldehyde groups, selected from the group of oxalic dihydrazide, malonic dihydrazide, succinic dihydrazide, carbodihydrazide, glutaric dihydrazide, adipic dihydrazide, sebacic dihydrazide, maleic dihydrazide, fumaric dihydrazide, itaconic dihydrazide, isophthalic dihydrazide, ethylenediamine, propylenediamine, tetramethylenediamine, pentamethylenediamine, hexamethylenediamine, diethylenetriamine, triethylenetetramine, polyethyleneimines, partly hydrolyzed polyvinylformamides, ethylene oxide and propylene oxide adducts of amines, cyclohexanediamine and xylylenediamine,

where the molar ratio of the groups in compound AH that are reactive with keto groups or with aldehyde groups to the keto and aldehyde groups in monomer b) is 1:10 to 2:1,

d) optionally further monomers d) having a proportion of 5 to 15 percent by weight, based on the total amount of monomers a) to d), selected from the group of acrylamide, methacrylamide, N-methylolacrylamide, N-methylolmethacrylamide, or phenyloxyethylglycol mono(meth)acrylate, hydroxyethyl acrylate, hydroxyethyl methacrylate, hydroxypropyl acrylate, hydroxypropyl methacrylate, 4-hydroxybutyl acrylate, 2-aminoethyl (meth)acrylate, tert-butylaminoethyl methacrylate, acrylonitrile, methacrylonitrile, vinyl, allyl and methallyl glycidyl ethers and glycidyl (meth)acrylate, butanediol di(meth)acrylate, allyl methacrylate and hydroxyalkyl (meth)acrylates having 1 to 10 carbon atoms in the alkyl group,

and
at least one curable composition based on silane-modified polymers (KS) that has been applied to the primer layer (G), **characterized in that** the silane-modified polymers have at least one end group of the general formula (I) in which

A is an oxygen atom or an -NR'- group in which R' is a hydrogen atom or an alkyl or aryl radical having 1 to 12 carbon atoms, amide, carbamate, urea, imino, carboxylate, carbamoyl, amidino, carbonate, sulfonate or sulfinate group,
R is a divalent hydrocarbyl radical having 1-6 carbon atoms,
V, Y, Z are substituents on the silicon atom and are each independently a methyl, ethyl, methoxy or ethoxy group, where at least one of the V, Y and Z radicals is a methoxy or ethoxy group,
n is 0 or 1.

3. Layer structure according to Claim 1 or 2, comprising at least one primer layer (G) obtainable from a polyacrylate primer (AG), **characterized in that** the polyacrylate primer (AG) has a proportion of solvents within the scope of TRGS 610, January 2011 edition, section 2.5, of less than 1%.

4. Layer structure according to Claims 1 to 3, comprising at least one primer layer (G) obtainable from a polyacrylate primer (AG), **characterized in that** the polyacrylate primer (AG) comprises a polyurethane dispersion having a minimum film formation temperature (measured on a film-forming bench with a temperature gradient, DIN ISO 2115:2001-04) of less than 5°C.

5. Layer structure according to Claims 1 to 4, comprising at least one primer layer (G) obtainable from a polyacrylate primer (AG), **characterized in that** the polyacrylate primer (AG) comprises further compounds X3Y3 that can react with reactive groups present in the aqueous polymer dispersion, selected from the group of compounds containing carbodiimide groups (carbodiimide crosslinkers) that can react with carboxylic acid groups present in the polymer dispersion.

6. Layer structure according to Claims 1 to 5, **characterized in that** the primer layer (G) is obtained by storage of an aqueous layer produced using the polyacrylate primer (AG) for 1 to 72 hours.

7. Layer system comprising at least one of the layer structures specified in Claims 1 to 6, comprising at least one primer layer (G) obtainable from a polyacrylate primer (AG) and at least one curable composition based on silane-modified polymers (KS) applied thereto.

8. Layer system comprising at least one of the layer structures specified in Claims 1 to 6, comprising at least one primer layer (G) obtainable from a polyacrylate primer (AG) and at least one curable composition based on silane-modified polymers (KS) applied thereto, and substrate bonded thereto, for example floor covering.

9. Method of bonding floor coverings to pretreated bases using at least one of the layer structures specified in Claims 1 to 6, comprising at least one primer layer (G) obtainable from a polyacrylate primer (AG) as pretreatment and at least one curable composition based on silane-modified polymers (KS) as adhesive.

10. Method according to Claim 10, **characterized in that** the polyacrylate primer (AG) is applied in one layer.

11. Method according to Claims 9 and 10, **characterized in that** a polyacrylate primer (AG) is first applied to the base and the floor covering is subsequently bonded to the base thus pretreated with at least one curable composition based on silane-modified polymers (KS), **characterized in that** the curable composition based on silane-modified

polymers (KS) is applied between 1-72 h, preferably 1-48 h, more preferably 2-24 h, after the application of the polyacrylate primer.

**12.** Layer system comprising a base, at least one primer layer (G) obtainable from a polyacrylate primer (AG), at least one curable composition based on silane-modified polymers (KS) applied thereto and floor covering bonded thereto, wherein the polyacrylate primer (AG) corresponds to one of the polyacrylate primers (AG) described in Claims 1-5, and the curable composition based on silane-modified polymers (KS) corresponds to one of the compositions based on silane-modified polymers (KS) described in Claims 1-5.

**13.** Method of sealing joins between 2 substrates using at least one of the layer structures specified in Claims 1 to 6, comprising at least one primer layer (G) obtainable from a polyacrylate primer (AG) as pretreatment and at least one curable composition based on silane-modified polymers (KS) as sealing compound.

**14.** Method according to Claim 13, **characterized in that** a polyacrylate primer (AG) is first applied to at least one of the two surfaces of a join formed by 2 substrates and at least one curable composition based on silane-modified polymers (KS) as sealing compound is subsequently introduced into the join, **characterized in that** the curable composition based on silane-modified polymers (KS) is introduced between 1-72 h, preferably 1-48 h, more preferably 2-24 h, after the application of the polyacrylate primer to the surface(s) of the join.

**15.** Layer system comprising 2 substrates, at least one primer layer (G1) obtainable from a polyacrylate primer (AG) on the side of the first substrate that faces the second substrate and optionally at least one primer layer (G2) obtainable from a polyacrylate primer (AG) on the side of the second substrate that faces the first substrate, and at least one curable composition based on silane-modified polymers (KS) disposed between the primer layer G1 and the second substrate or primer layer G2, wherein the polyacrylate primer (AG) corresponds to one of the polyacrylate primers (AG) described in Claims 1-5 and the curable composition based on silane-modified polymers (KS) corresponds to one of the compositions based on silane-modified polymers (KS) described in Claims 1-5.

**16.** Kit of parts comprising at least one of the polyacrylate primers (AG) or primer layers (G) specified in Claims 1-6 and at least one of the curable compositions based on silane-modified polymers (KS) specified in Claims 1-6.

## Revendications

**1.** Structure stratifiée contenant
au moins une couche d'apprêt (G) pouvant être obtenue à partir d'un apprêt de polyacrylate (AG), **caractérisée en ce que** l'apprêt de polyacrylate (AG) est présent sous la forme d'une dispersion aqueuse de polymère, cette dispersion aqueuse de polymère contenant des particules de polymère dispersées dans de l'eau et pouvant être préparée par polymérisation radicalaire de monomères contenant

a) au moins 50 % en poids, par rapport à la quantité totale de monomères a) à d), d'au moins un monomère choisi dans le groupe constitué par les acrylates d'alkyle en $C_{1-20}$, les méthacrylates d'alkyle en $C_{1-20}$, les esters vinyliques d'acides carboxyliques contenant jusqu'à 20 atomes de carbone, des composés vinylaromatiques contenant jusqu'à 20 atomes de carbone, des halogénures de vinyle, des éthers vinyliques d'alcools contenant 1 à 10 atomes de carbone, des hydrocarbures aliphatiques contenant de 2 à 8 atomes de carbone et une ou deux doubles liaisons, et des mélanges de ces monomères et
b) au moins 0,1 % en poids, par rapport à la quantité totale de monomères a) à d), d'au moins un monomère comprenant au moins un groupe acide et des mélanges de ces monomères, et
c) au moins 0,1 à 5 % en poids, par rapport à la quantité totale de monomères a) à d), d'au moins un composé éthyléniquement insaturé comportant au moins un groupe fonctionnel choisi parmi des groupes céto et des groupes aldéhyde,

la dispersion aqueuse de polymère contenant, en plus des particules de polymère dispersées dans l'eau, au moins un composé AH qui présente au moins deux groupes fonctionnels capables de subir une réaction de réticulation avec les groupes céto ou avec les groupes aldéhyde,
le rapport molaire des groupes réactifs avec les groupes céto ou avec les groupes aldéhyde du composé AH sur les groupes céto et les groupes aldéhyde du monomère b) étant de 1 : 10 à 2 : 1 ;

d) éventuellement d'autres monomères

et
au moins une composition durcissable à base de polymères modifiés par un silane (KS) appliquée sur la couche d'apprêt (G), **caractérisée en ce que** les polymères modifiés par un silane présentent au moins un groupe terminal de formule générale (I)

$$\textbf{-}A_n\textbf{-R-SiVYZ} \quad \text{(I)},$$

dans laquelle

A représente un groupe liant divalent contenant au moins un hétéroatome,
R représente un radical hydrocarboné divalent comportant 1 à 12 atomes de carbone,
V, Y, Z représentent des substituants au niveau de l'atome de Si, qui représentent indépendamment les uns des autres des groupes alkyle en $C_{1-8}$, alcoxy en $C_{1-8}$ ou acyloxy en $C_{1-8}$, au moins l'un des radicaux V, Y, Z représentant un groupe alcoxy en $C_{1-8}$ ou acyloxy en $C_{1-8}$, et
n représente 0 ou 1.

**2.** Structure stratifiée selon la revendication 1 contenant
au moins une couche d'apprêt (G) pouvant être obtenue à partir d'un apprêt de polyacrylate (AG), **caractérisée en ce que** l'apprêt de polyacrylate (AG) est présent sous la forme d'une dispersion aqueuse de polymère, cette dispersion aqueuse de polymère contenant des particules de polymère dispersées dans de l'eau et pouvant être préparée par polymérisation radicalaire de monomères contenant

a) 50 à 90 % en poids, par rapport à la quantité totale de monomères a) à d), d'au moins un monomère choisi dans le groupe composé par le méthacrylate de méthyle, l'acrylate de méthyle, l'acrylate de butyle, l'acrylate de n-butyle, l'acrylate d'éthyle, l'acrylate de 2-éthylhexyle, l'acrylate de 2-propylheptyle, l'acrylate de n-hexyle, l'acrylate de n-octyle, l'acrylate d'hexyle, l'acrylate d'octyle, un (méth)acrylate de benzényle, l'acrylate d'isobutyle, un (méth)acrylate de tert-butyle, un (méth)acrylate de cyclohexyle, le laurate de vinyle, le stéarate de vinyle, le propionate de vinyle, l'ester vinylique de l'acide versatique, l'acétate de vinyle, un vinyltoluène, l'alpha-méthylstyrène et le para-méthylstyrène, le styrène, l'alpha-butylstyrène, le 4-n-butylstyrène, le 4-n-décylstyrène, le chlorure de vinyle, le chlorure de vinylidène, l'éther de vinyle et de méthyle et l'éther d'isobutyle et de vinyle et des mélanges de ces monomères et
b) de 0,5 à 5 % en poids, par rapport à la quantité totale de monomères a) à d), d'au moins un monomère comportant au moins un groupe acide choisi dans le groupe des acides monocarboxyliques et dicarboxyliques à insaturation alpha,bêta-monoéthylénique, des demi-esters d'acides dicarboxyliques à insaturation alpha,bêta-monoéthylénique, des anhydrides des acides carboxyliques à insaturation alpha,bêta-monoéthylénique mentionnés précédemment ainsi que des acides sulfoniques, des acides phosphoniques ou des dihydrogénophosphates à insaturation éthylénique et leurs sels solubles dans l'eau et des mélanges de ces monomères et
c) 0,2 à 5 % en poids, par rapport à la quantité totale de monomères a) à d), d'au moins un composé à insaturation éthylénique comportant au moins un groupe fonctionnel choisi parmi les groupes céto et les groupes aldéhyde choisis dans le groupe composé par l'acroléine, la méthacroléine, les vinylalkylcétones comportant 1 à 20, un formylstyrène, les esters d'alkyle d'acide (méth) acrylique comportant un ou deux groupes céto ou aldéhyde, respectivement un groupe aldéhyde et un groupe céto dans le radical alkyle, le radical alkyle comprenant de préférence au total 3 à 10 atomes de carbone, des N-oxoalkyl(méth)acrylamides de formule $R_6$-C(=O)-$R_7$-NH-C (=O)-$CR_8$=$CH_2$, dans laquelle $R_6$ et $R_8$ signifient indépendamment l'un de l'autre hydrogène ou un groupe hydrocarboné comportant 1 à 10 atomes de carbone et $R_7$ signifie un groupe hydrocarboné comportant 2 à 15 atomes de carbone,

la dispersion aqueuse de polymère contenant, en plus des particules de polymère dispersées dans l'eau, au moins un composé AH qui présente au moins deux groupes fonctionnels qui peuvent subir une réaction de réticulation avec les groupes céto ou avec les groupes aldéhyde, choisis parmi le groupe composé par le dihydrazide d'acide oxalique, le dihydrazide d'acide malonique, le dihydrazide d'acide succinique, le carbodihydrazide, le dihydrazide d'acide glutarique, le dihydrazide d'acide adipique, le dihydrazide d'acide sébacique, le dihydrazide d'acide maléique, le dihydrazide d'acide fumarique, le dihydrazide d'acide itaconique, le dihydrazide d'acide isophtalique, l'éthylènediamine, la propylènediamine, la tétraméthylènediamine, pentaméthylènediamine, l'hexaméthylènediamine, la diéthylènetriamine, la triéthylènetétramine, des polyéthylèneimines, des polyvinylformamides partiellement hydrolysés, des adduits d'oxyde d'éthylène et d'oxyde de propylène avec des amines, une cyclohexanediamine et une xylylènediamine,
le rapport molaire des groupes réactifs avec les groupes céto ou avec les groupes aldéhyde du composé

AH sur les groupes céto et aldéhyde du monomère b) étant de 1 : 10 à 2 : 1,

d) éventuellement d'autres monomères d) en une proportion de 5 à 15 % en poids par rapport à la quantité totale des monomères a) à d), choisis dans le groupe composé par l'acrylamide, le méthacrylamide, le N-méthylolacrylamide, le N-méthylolméthacrylamide, ou un mono(méth)acrylate de phénylоxyéthylglycol, l'acrylate d'hydroxyéthyle, le méthacrylate d'hydroxyéthyle, l'acrylate d'hydroxypropyle, le méthacrylate d'hydroxypropyle, l'acrylate de 4-hydroxybutyle, un (méth)acrylate de 2-amino-éthyle, le (méth)acrylate de tert-butylaminoéthyle, l'acrylonitrile, le méthacrylonitrile, les éthers glycidyliques de vinyle, d'allyle et de méthallyle et un (méth)acrylate de glycidyle, un di(méth)acrylate de butanediol, le méthacrylate d'allyle et des (méth)acrylates d'hydroxyalkyle comportant 1 à 10 atomes de carbone dans le groupe alkyle,

et
au moins une composition durcissable à base de polymères modifiés par un silane (KS) appliquée sur la couche d'apprêt (G), **caractérisée en ce que** les polymères modifiés par un silane présentent au moins un groupe terminal de formule générale (I), dans laquelle

A représente un atome d'oxygène ou un groupe -NR'-, dans lequel R' est un atome de H ou un radical alkyle ou aryle comportant 1 à 12 atomes de carbone, ou représente un groupe amide, carbamate, urée, imino, carboxylate, carbamoyle, amidino, carbonate, sulfonate ou sulfinate,
R représente un radical hydrocarboné divalent comportant 1 à 6 atomes de carbone,
V, Y, Z représentent des substituants au niveau de l'atome de Si et représentent à chaque fois indépendamment les uns des autres un groupe méthyle, éthyle, méthoxy ou éthoxy, au moins l'un des radicaux V, Y ou Z représentant un groupe méthoxy ou éthoxy, et
n représente 0 ou 1.

**3.** Structure stratifiée selon la revendication 1 ou 2 contenant au moins une couche d'apprêt (G) pouvant être obtenue à partir d'un apprêt de polyacrylate (AG), **caractérisée en ce que** l'apprêt de polyacrylate (AG) présente une proportion de solvants, au sens de la TRGS 610, édition : janvier 2011, paragraphe 2.5, de moins de 1 %.

**4.** Structure stratifiée selon les revendications 1 à 3 contenant au moins une couche d'apprêt (G) pouvant être obtenue à partir d'un apprêt de polyacrylate (AG), **caractérisée en ce que** l'apprêt de polyacrylate (AG) contient une dispersion de polyétheruréthane dotée d'une température minimale de formation de film (mesurée sur un banc de formation de film avec un gradient de température, norme DIN ISO 2115:2001-04) inférieure à 5 °C.

**5.** Structure stratifiée selon les revendications 1 à 4 contenant au moins une couche d'apprêt (G) pouvant être obtenue à partir d'un apprêt de polyacrylate (AG), **caractérisée en ce que** l'apprêt de polyacrylate (AG) contient d'autres composés X3Y3, qui peuvent réagir avec des groupes réactifs présents dans la dispersion aqueuse de polymère, choisis dans le groupe de composés qui contiennent des groupes carbodiimide (agent de réticulation de carbodiimide), qui peuvent réagir avec des groupes acide carboxylique présents dans la dispersion de polymère.

**6.** Structure stratifiée selon les revendications 1 à 5, **caractérisée en ce que** la couche d'apprêt (G) est obtenue par un stockage pendant 1 à 72 heures d'une couche aqueuse produite en utilisant l'apprêt de polyacrylate (AG).

**7.** Système stratifié comprenant au moins l'une des structures stratifiées indiquées dans les revendications 1 à 6 comprenant au moins une couche d'apprêt (G) pouvant être obtenue à partir d'un apprêt de polyacrylate (AG) et au moins une composition durcissable appliquée sur celle-ci à base de polymères modifiés par un silane (KS).

**8.** Système stratifié comprenant au moins l'une des structures stratifiées indiquées dans les revendications 1 à 6 comprenant au moins une couche d'apprêt (G) pouvant être obtenue à partir d'un apprêt de polyacrylate (AG) et au moins une composition durcissable appliquée sur celle-ci à base de polymères modifiés par un silane (KS) et d'un substrat collé sur celle-ci, par exemple un revêtement de sol.

**9.** Procédé pour le collage de revêtements de sol sur des supports prétraités en utilisant au moins l'une des structures stratifiées indiquées dans les revendications 1 à 6 comprenant au moins une couche d'apprêt (G) pouvant être obtenue à partir d'un apprêt de polyacrylate (AG) en tant que prétraitement et au moins une composition durcissable à base de polymères modifiés par un silane (KS) en tant qu'adhésif.

**10.** Procédé selon la revendication 10, **caractérisé en ce que** l'apprêt de polyacrylate (AG) est appliqué de manière

monocouche.

**11.** Procédé selon les revendications 9 et 10, **caractérisé en ce qu'**un apprêt de polyacrylate (AG) est appliqué d'abord sur le support et ensuite le revêtement de sol est collé, sur le support ainsi prétraité, avec au moins une composition durcissable à base de polymères modifiés par un silane (KS), **caractérisé en ce que** la composition durcissable à base de polymères modifiés par un silane (KS) est appliquée entre 1 et 72 h, préférablement 1 et 48 h, particulièrement préférablement 2 et 24 h après l'application de l'apprêt de polyacrylate.

**12.** Système stratifié comprenant un support, au moins une couche d'apprêt (G) pouvant être obtenue à partir d'un apprêt de polyacrylate (AG), au moins une composition durcissable appliquée sur celle-ci à base de polymères modifiés par un silane (KS) et un revêtement de sol collé sur celle-ci, l'apprêt de polyacrylate (AG) correspondant à l'un des apprêts de polyacrylate (AG) décrits dans les revendications 1 à 5 et la composition durcissable à base de polymères modifiés par un silane (KS) correspondant à l'une des compositions à base de polymères modifiés par un silane (KS) décrites dans les revendications 1 à 5.

**13.** Procédé pour étanchéifier des jointures entre 2 substrats en utilisant au moins l'une des structures stratifiées indiquées dans les revendications 1 à 6, comprenant au moins une couche d'apprêt (G) pouvant être obtenue à partir d'un apprêt de polyacrylate (AG) en tant que prétraitement et au moins une composition durcissable à base de polymères modifiés par un silane (KS) en tant que masse d'étanchéité.

**14.** Procédé selon la revendication 13, **caractérisé en ce qu'**un apprêt de polyacrylate (AG) est d'abord appliqué sur au moins l'une des deux surfaces d'une jointure formée par 2 substrats et ensuite au moins une composition durcissable à base de polymères modifiés par un silane (KS) est introduite en tant que masse d'étanchéité dans la jointure, **caractérisé en ce que** la composition durcissable à base de polymères modifiés par un silane (KS) est introduite entre 1 et 72 h, préférablement 1 et 48 h, particulièrement préférablement 2 et 24 h après l'application de l'apprêt de polyacrylate sur la surface ou les surfaces de la jointure.

**15.** Système stratifié comprenant 2 substrats, au moins une couche d'apprêt (G1) pouvant être obtenue à partir d'un apprêt de polyacrylate (AG) sur le côté du premier substrat qui est tourné vers le deuxième substrat et éventuellement au moins une couche d'apprêt (G2) pouvant être obtenue à partir d'un apprêt de polyacrylate (AG) sur le côté du deuxième substrat qui est tourné vers le premier substrat, et au moins une composition durcissable à base de polymères modifiés par un silane (KS) se trouvant entre la couche d'apprêt G1 et le deuxième substrat respectivement la couche d'apprêt G2, l'apprêt de polyacrylate (AG) correspondant à l'un des apprêts de polyacrylate (AG) décrits dans les revendications 1 à 5 et la composition durcissable à base de polymères modifiés par un silane (KS) correspondant à l'une des compositions à base de polymères modifiés par un silane (KS) décrites dans les revendications 1 à 5.

**16.** Kit de pièces contenant au moins l'un(e) des apprêts de polyacrylate (AG) respectivement des couches d'apprêt (G) indiqué(e)s dans les revendications 1 à 6 et au moins l'une des compositions durcissables à base de polymères modifiés par un silane (KS) indiquées dans les revendications 1 à 6.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2722097 A
- DE 2061213 A
- DE 2207209 A
- EP 2389397 A1
- EP 596360 A
- EP 2440592 A


### In der Beschreibung aufgeführte Nicht-Patentliteratur


- *CHEMICAL ABSTRACTS,* 022984-54-9
- *CHEMICAL ABSTRACTS,* 16230-35-6
- **T.G. FOX.** *Bull. Am. Phys. Soc.,* 1956, vol. 1 (I I), 123
- Ullmann's Encyclopädie der technischen Chemie. Verlag Chemie, 1980, vol. 19, 18
- **ULLMANN'S.** Ecyclopedia of Industrial Chemistry. VCH, 1992, vol. 5, 169
- **B. J. BRANDRUP.** E.H. Immergut, Polymer Handbook. J. Wiley, 1966
- *CHEMICAL ABSTRACTS,* 79-10-7, Aldrich
- *CHEMICAL ABSTRACTS,* 80-62-6
- *CHEMICAL ABSTRACTS,* 100-42-5
- *CHEMICAL ABSTRACTS,* 141-32-2
- *CHEMICAL ABSTRACTS,* 868-77-9
- *CHEMICAL ABSTRACTS,* 1071-93-8
- *CHEMICAL ABSTRACTS,* 2873-97-4
- *CHEMICAL ABSTRACTS,* 79-06-1
- *CHEMICAL ABSTRACTS,* 7727-54-0
- *CHEMICAL ABSTRACTS,* 68610-22-0
- *CHEMICAL ABSTRACTS,* 34590-94-8
- *CHEMICAL ABSTRACTS,* 29387-86-8